# EUROPEAN PATENT APPLICATION

(11) **EP 4 825 633 A1**
(43) Date of publication of application: **21.10.2026**
(21) Application number: 26171411.7
(22) Date of filing: 09.04.2026
(51) Int. Cl.: B60K 35/81, B60W 30/18, B60W 50/14

(54) **INFORMATION DISPLAY SYSTEM**

(30) Priority: 16.04.2025 JP 2025067604
(71) Applicant: KUBOTA CORPORATION, Osaka-shi, Osaka 530-0011 (JP)
(72) Inventor: HASEBE, Daisuke, Sakai-shi, Osaka, 5900908 (JP); FUJII, Takafumi, Sakai-shi, Osaka, 5900908 (JP)
(74) Representative: Müller-Boré & Partner Patentanwälte PartG mbB

(57) **Abstract**

An information display system (SY) includes an input interface (IP) to indicate an input vehicle speed (Vin) of a travel vehicle body (3) according to an input operation by a user, a controller (21) configured or programmed to control a vehicle speed of the travel vehicle body (3) based on the input vehicle speed (Vin) from the input interface (IP), a vehicle speed acquirer (27a) to acquire an actual vehicle speed (Vac) of the travel vehicle body (3), and a display (DP) to display the input vehicle speed (Vin) indicated by the input interface (IP) and the actual vehicle speed (Vac) acquired by the vehicle speed acquirer (27a).

## Description

### BACKGROUND OF THE INVENTION

### Field of the Invention

The present invention relates to information display systems to display vehicle speeds of a working vehicle.

### Description of the Related Art

Japanese Unexamined Patent Application Publication No. 2018-188058 discloses a speedometer display to display a vehicle speed by displaying a needle as an image on a scale indicating speed, the needle being configured to rotate according to the vehicle speed.

### SUMMARY OF THE INVENTION

The speedometer display of Japanese Unexamined Patent Application Publication No. 2018-188058 displays the vehicle speed (the actual vehicle speed of a vehicle), but cannot display an input vehicle speed according to an operation of the accelerator pedal by a user. Thus, the user cannot recognize the relationship between the input vehicle speed and the actual vehicle speed. In particular, a working vehicle such as a tractor performs work on an agricultural field by a working device while traveling on the agricultural field, thus, it is important to travel at a target vehicle speed, and the relationship between the input vehicle speed input by a user and the actual vehicle speed is also important. Even if a working vehicle is equipped with the speedometer display of Japanese Unexamined Patent Application Publication No. 2018-188058, a user cannot drive the working vehicle while recognizing the correspondence status between the input vehicle speed and the actual vehicle speed, thus the reality is that support for the vehicle speed control of the working vehicle performed by a user is insufficient.

The present invention has been devised to solve such an issue in the related art, and it is an object to support the vehicle speed control of a working vehicle performed by a user.

An information display system according to an example embodiment of the present invention includes an input interface to indicate an input vehicle speed of a travel vehicle body according to an input operation by a user, a controller configured or programmed to control a vehicle speed of the travel vehicle body based on the input vehicle speed from the input interface, a vehicle speed acquirer to acquire an actual vehicle speed of the travel vehicle body, and a display to display the input vehicle speed indicated by the input interface and the actual vehicle speed acquired by the vehicle speed acquirer.

With one or more example embodiments of the present invention, it is possible to support the vehicle speed control of a working vehicle performed by a user.

The above and other elements, features, steps, characteristics and advantages of the present invention will become more apparent from the following detailed description of the example embodiments with reference to the attached drawings.

### BRIEF DESCRIPTION OF THE DRAWINGS

A more complete appreciation of example embodiments of the present invention and many of the attendant advantages thereof will be readily obtained as the same becomes better understood by reference to the following detailed description when considered in connection with the accompanying drawings described below.
FIG. 1 is a block diagram of an information display system in a first example embodiment of the present invention.
FIG. 2 is a side view of a tractor which is an example of a remote working vehicle.
FIG. 3A is a perspective view of a linkage as seen from the rear.
FIG. 3B is a table illustrating an example of correspondence data.
FIG. 4 illustrates an example of a display screen of a display in a remote device.
FIG. 5A is a chart illustrating a relationship between a maximum vehicle speed, an upper vehicle speed limit, an input vehicle speed, and an actual vehicle speed of a remote working vehicle.
FIG. 5B is a chart for explaining transition of the actual vehicle speed of a remote working vehicle with respect to the input vehicle speed.
FIG. 6A illustrates a first example of a meter image display portion.
FIG. 6B illustrates a second example of a meter image display portion.
FIG. 6C illustrates a third example of a meter image display portion.
FIG. 7A illustrates a fourth example of a meter image display portion.
FIG. 7B illustrates a fifth example of a meter image display portion.
FIG. 7C illustrates a sixth example of a meter image display portion.
FIG. 7D illustrates a seventh example of a meter image display portion.
FIG. 7E illustrates an eighth example of a meter image display portion.
FIG. 8 is a chart illustrating an example of transition of deviation of the actual vehicle speed with respect to the input vehicle speed, and indication on a meter image display portion when a speed-reduction condition is satisfied.
FIG. 9 is a chart illustrating an example of transition of deviation of the actual vehicle speed with respect to the input vehicle speed, and indication on a meter image display portion when a speed-reduction condition is satisfied.
FIG. 10 is a chart illustrating an example of transition of deviation of the actual vehicle speed with respect to the input vehicle speed, and indication on a meter image display portion when a speed-reduction condition is satisfied.
FIG. 11 is a chart illustrating an example of transition of deviation of the actual vehicle speed with respect to the input vehicle speed, and indication on a meter image display portion when a speed-reduction condition is satisfied.
FIG. 12 is a chart illustrating an example of transition of deviation of the actual vehicle speed with respect to the input vehicle speed, and indication on a meter image display portion when a speed-reduction condition is satisfied.
FIG. 13 is a chart illustrating an example of transition of deviation of the actual vehicle speed with respect to the input vehicle speed, and indication on a meter image display portion when a speed-reduction condition is satisfied.
FIG. 14 is a flowchart illustrating a display process on a display screen in the remote device.
FIG. 15 is a block diagram of an information display system in a second example embodiment of the present invention.

### DESCRIPTION OF THE EXAMPLE EMBODIMENTS

Example embodiments will now be described with reference to the accompanying drawings, wherein like reference numerals designate corresponding or identical elements throughout the various drawings. The drawings are to be viewed in an orientation in which the reference numerals are viewed correctly.

Hereinafter, example embodiments of the present invention will be described with reference to the drawings.

### First Example Embodiment

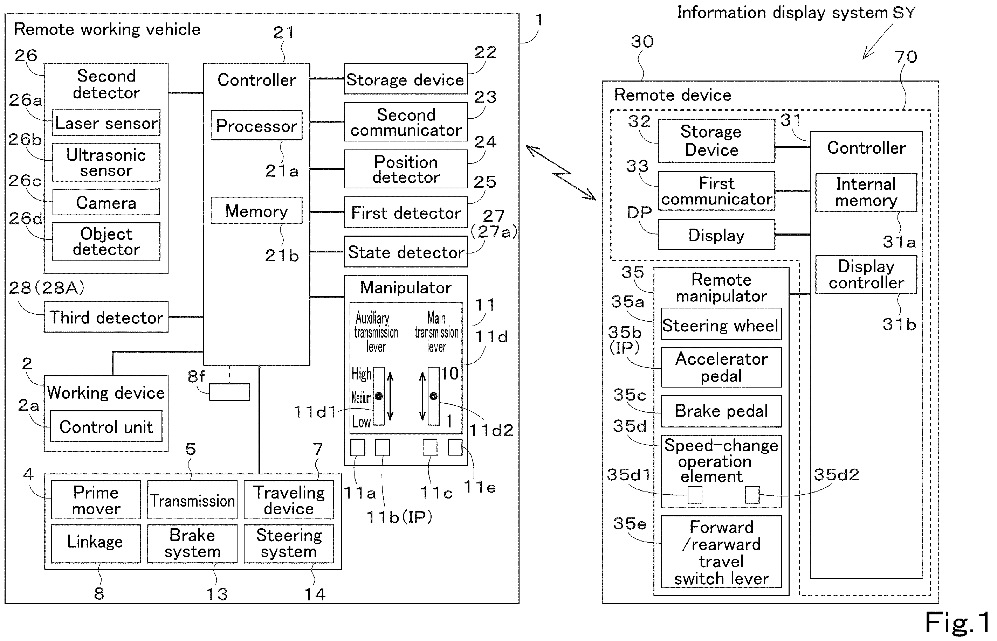

FIG. 1 is a block diagram of an information display system SY in a first example embodiment of the present invention. As illustrated in FIG. 1, the information display system SY includes a remote working vehicle 1 and a remote device 30. The remote device 30 enables remote manipulation (or remote operation) of the remote working vehicle 1 and remote monitoring of the remote working vehicle 1.

The remote working vehicle 1 is a farm machine (also referred to as a "remotely manipulated (or remotely operated, or remotely controlled) agricultural machine") that enables remote driving (for example, remote traveling and remote working) by the remote device 30. The remote working vehicle 1 includes an agricultural machine such as a tractor, a rice transplanter, and a combine to perform harvesting, on which the working device 2 such as an implement is mounted (supported). In the following, a tractor as the remote working vehicle 1 will be described as an example, and a description of the agricultural machines other than the tractor will be omitted. The remote working vehicle 1 is a tractor including an operator's seat 10 on which a user (operator) sits, however, may be an agricultural machine (such as a tractor) including no operator's seat 10, dedicated for remote manipulation.

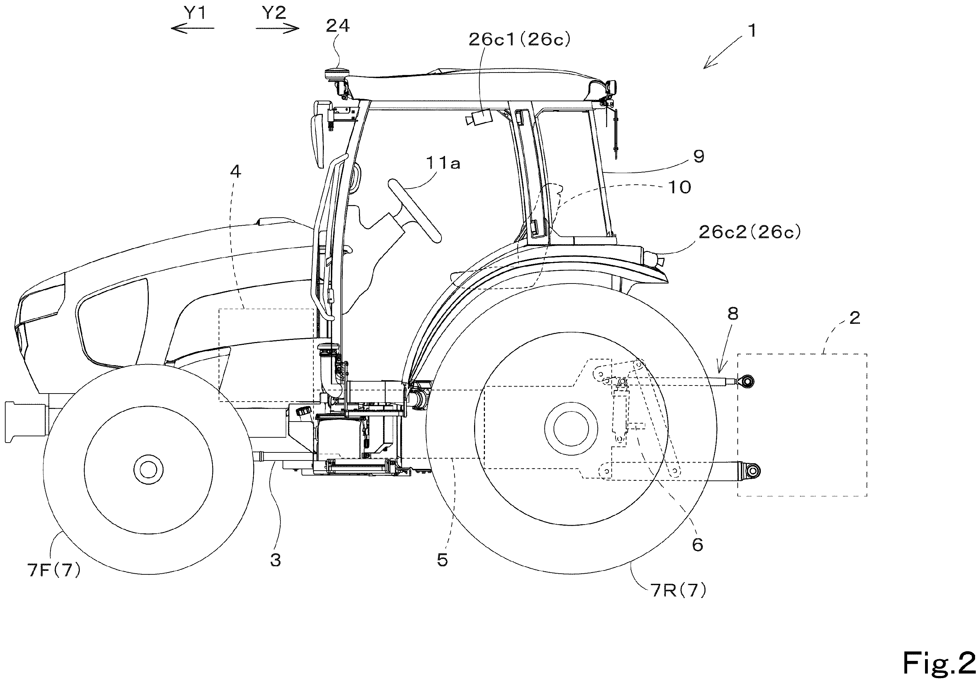

FIG. 2 is a side view of a tractor which is an example of the remote working vehicle 1. Hereinafter, a description will be given assuming that the front (arrow Y1 direction in FIG. 2) of a user sitting on the operator's seat 10 of the remote working vehicle 1 is forward, the rear (arrow Y2 direction in FIG. 2) of the user is rearward, the left of the user is leftward (the near side in FIG. 2), and the right of the user is rightward (the far side in FIG. 2). Also, a description will be given assuming that a horizontal direction perpendicular to the front-rear direction of the remote working vehicle 1 is a width direction. The remote working vehicle 1 includes a travel vehicle body 3. The travel vehicle body 3 is provided with a traveling device 7. The traveling device 7 includes front wheels 7F and rear wheels 7R on both the right and left of the travel vehicle body 3, respectively to support and allow the travel vehicle body 3 to travel. The traveling device 7 may be a crawler device.

As illustrated in FIG. 1 and FIG. 2, a prime mover 4, a transmission 5, a brake system 13 and a steering system 14 are provided in or on the travel vehicle body 3. The prime mover 4 includes an engine (a diesel engine, a gasoline engine) or an electric motor. The transmission 5 changes the propulsive force of the traveling device 7, for example, by changing speed stages, and switches between forward travel and rearward travel of the traveling device 7. The transmission 5 includes multiple gears to transmit power, a shifter to change connection between the gears, and a clutch to switch between transmission and disconnection of power, and changes speed stages by these components.

Specifically, the transmission 5 includes a main shaft (propulsion shaft), a main transmission unit, and an auxiliary transmission unit. The propulsion shaft is rotatably supported by the housing case (transmission case) of the transmission 5, and the power from the crankshaft of the prime mover 4 is transmitted to the propulsion shaft. The main transmission unit includes multiple gears and a shifter to change connection between the gears. The main transmission unit changes the rotation input from the propulsion shaft and outputs the rotation (changes speed stages) by appropriately changing connection (engagement) between the gears with the shifter. As with the main transmission unit, the auxiliary transmission unit includes multiple gears and a shifter to change connection between the gears. The auxiliary transmission unit changes the rotation input from the main transmission unit and outputs the rotation (changes speed stages) by appropriately changing connection (engagement) between the gears with the shifter. Note that in the present example embodiment, the transmission 5 allows the main transmission unit (for example, continuously variable transmission) and the auxiliary transmission unit (for example, stepped transmission) to change speed stages independently.

The transmission 5 can switch the travel mode between (4WD constant speed state) in which the front wheels 7F and the rear wheels 7R are driven by power in four-wheel drive (4WD) and the rotational speeds of the front wheels 7F and the rear wheels 7R are approximately the same, (4WD speed-up state) in which four-wheel drive is provided and the rotational speed of the front wheels 7F is faster than the rotational speed of the rear wheels 7R, and two-wheel drive (2WD) in which only rear wheels 7R are driven.

The transmission 5 transmits the power of the prime mover 4 to a PTO (Power takeoff) shaft 6. The PTO shaft 6 rotates by the power from the prime mover 4. The PTO shaft 6 is an output shaft to drive the working device 2 by being connected to the working device 2. The rotational driving force of the PTO shaft 6 is transmitted to the working device 2.

The periphery of the operator's seat 10 is provided with a manipulator 11 to manually operate the remote working vehicle 1. The remote working vehicle 1 allows unmanned travel and work, however, a user sitting on the operator's seat 10 can travel the remote working vehicle 1 and cause the working device 2 to perform work by operating the manipulator 11. The manipulator 11 includes a steering wheel 11a, an input interface IP (for example, an accelerator pedal 11b), a brake pedal 11c, a speed-change operation element (transmission operation element) 11d, and an operation member (manual operator, manual operating instrument) 11e.

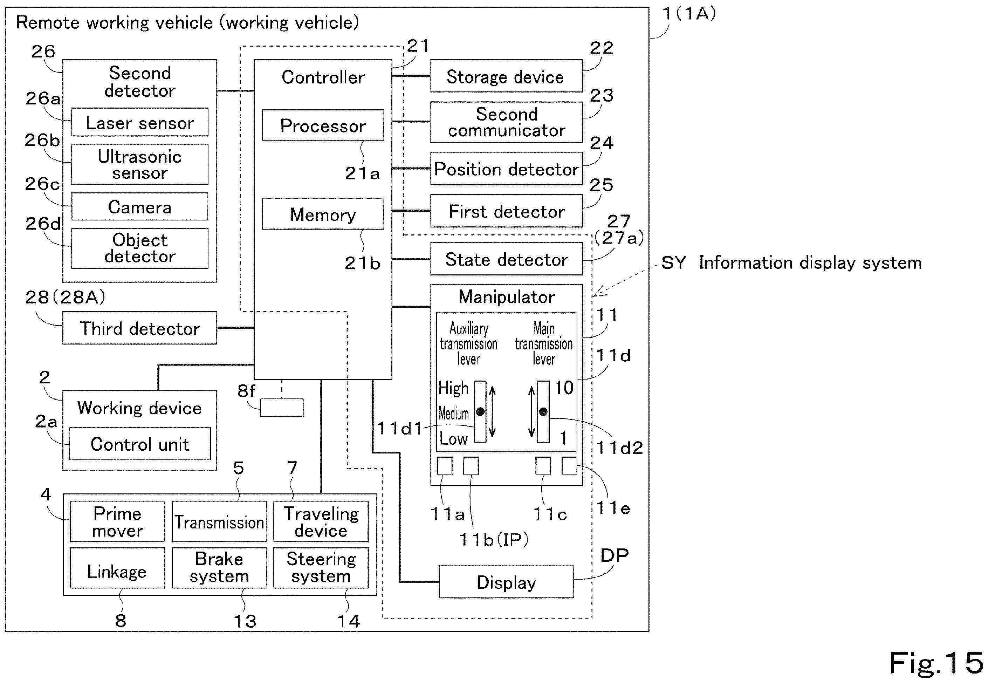

The input interface IP is, for example, the accelerator pedal 11b to be depressed by a foot of a user, and indicates an input vehicle speed Vin of the travel vehicle body 3 according to an input operation by the user. Note that the input interface IP may be a hand accelerator to be operated by a hand of a user. The input interface IP may be a display DP (see FIG. 15 referred to below) including a touch panel, and may be configured to receive input of a touch operation (for example, indication or change of the input vehicle speed Vin) performed on the display DP by a user.

As illustrated in FIG. 1, the speed-change operation element 11d includes an auxiliary speed-change operation element (auxiliary transmission operation element) 11d1 to change the speed stage of the auxiliary transmission unit, and a main speed-change operation element 11d2 to change the speed stage of the main transmission unit. The auxiliary speed-change operation element 11d1 and the main speed-change operation element 11d2 are, for example, operating levers. The auxiliary speed-change operation element 11d1 and the main speed-change operation element 11d2 are provided on the left of the operator's seat 10. Note that the auxiliary speed-change operation element 11d1 and the main speed-change operation element 11d2 may be operation elements such as a button, a switch, a dial, a pedal other than the operating lever, provided that the operation element can change speed stages (transmission gear ratios).

The number of stages of the auxiliary transmission unit (that is, the number of stages of the auxiliary transmission) is three stages such as low speed (L), medium speed (M), and high speed (H) as illustrated in FIG. 1. The auxiliary speed-change operation element 11d1 can be moved to the position of "low", "medium", and "high". The speed stage of the auxiliary transmission is changed according to the operation position of the auxiliary speed-change operation element 11d1. The auxiliary speed-change operation element 11d1 may be moved to the position of "low", "medium", "N (neutral position)", and "high", or may be an auxiliary transmission stage type other than these.

The main transmission unit can change the speed stage in the range of "1" to "10" steplessly. The larger the number, the higher the speed indicated. The speed stage of the main transmission is changed in the range of "1" to "10" steplessly according to the operation position of the main speed-change operation element 11d2. The main transmission unit may be a stepped transmission (for example, in three stages of "1", "2", and "3"). The larger the number, the higher the speed indicated. The main speed-change operation element 11d2 can be moved to the position of "1", "2", and "3", and the speed stage of the main transmission is changed according to the operation position. The main speed-change operation element 11d2 is not limited to three stages, and may be moved to the position in multiple stages (for example, nine stages) other than three stages. The main speed-change operation element 11d2 may be a notch-style glide shift to perform transmission of, for example, forward travel multiple stages (for example, 16 stages), N (neutral position), rearward travel multiple stages (for example, 10 stages) without using a clutch.

A later-described controller 21 sets the speed stage (transmission gear ratio) of the auxiliary transmission unit according to the operation position of the auxiliary speed-change operation element 11d1, and changes the speed stage of the main transmission unit according to the operation position of the main speed-change operation element 11d2. For example, when the operation position of the auxiliary speed-change operation element 11d1 is in the position of "high", the controller 21 sets the speed stage of the auxiliary transmission to "high speed" (H), and when the operation position of the main speed-change operation element 11d2 is in the position of "10", the controller 21 sets the speed stage of the main transmission to "10".

The operation member 11e is a shuttle lever to receive an instruction for forward travel or rearward travel of the travel vehicle body 3, but may be a switch, a dial, or the like. For example, an operation of a user allows the operation member 11e to be moved to a forward travel position in which the travel direction of the traveling device 7 is switched to forward travel (direction of the arrow Y1 in FIG. 2), a rearward travel position in which the travel direction of the traveling device 7 is switched to rearward travel (direction of the arrow Y2 in FIG. 2), and a neutral position in which the traveling device 7 is switched to neutral.

The brake system 13 controls the movement of the travel vehicle body 3 according to an operation of the brake pedal 11c. The steering system 14 operates according to an operation of the steering wheel 11a such that the travel vehicle body 3 is oriented in a predetermined direction.

A linkage 8 (raising/lowering device) is provided at a rear portion of the travel vehicle body 3. The linkage 8 includes a three-point linkage or the like. The linkage 8 can detachably connect the working device 2 to the travel vehicle body 3. The remote working vehicle 1 (the travel vehicle body 3) can tow the working device 2 by connecting the working device 2 to the linkage 8, and causing the traveling device 7 to travel. The linkage 8 can raise and lower the working device 2 and change the position thereof by driving an actuator (for example, a hydraulic cylinder).

The working device 2 includes, for example, a cultivator to cultivate soil, a fertilizer spreader to spread fertilizer, an agricultural chemical spreader to spread agricultural chemicals, a harvester to perform harvesting, a mower to mow grass and the like, a tedder to spread grass and the like, a rake to collect grass and the like, and a baler to bundle grass and the like. The remote working vehicle 1 performs agricultural work on an agricultural field by these working devices 2.

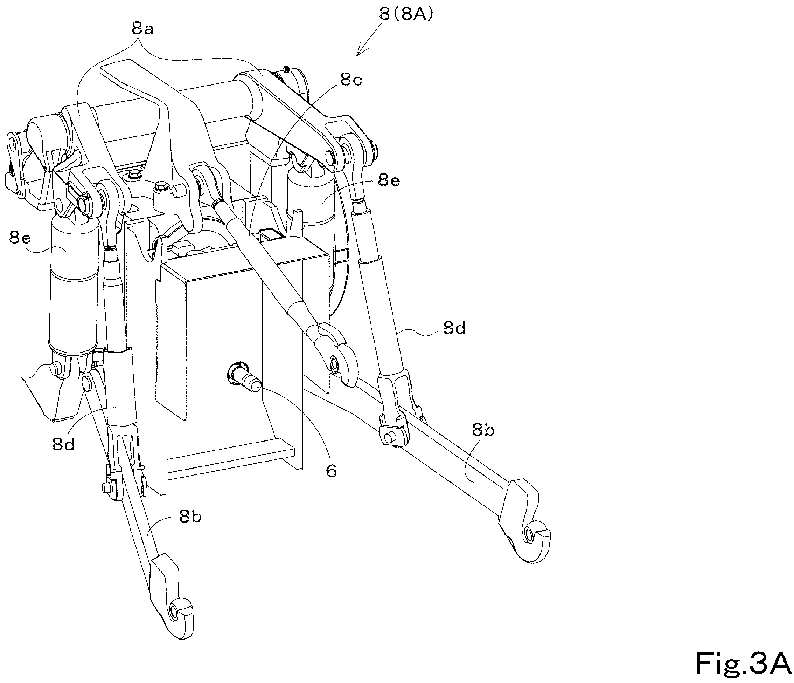

FIG. 3A is a perspective view of the linkage 8 as seen from the rear. As illustrated in FIG. 3A, the linkage 8 includes lift arms 8a, lower links 8b, a top link 8c, lift rods 8d, and lift cylinders 8e. The front end of each lift arm 8a is supported swingably upward or downward by the upper rear of a case (transmission case) to house the transmission 5. The lift arm 8a is swung (raised or lowered) by the drive of a corresponding lift cylinder 8e. The lift cylinder 8e includes a hydraulic cylinder. The lift cylinder 8e is connected to a hydraulic pump through a control valve 8f (see FIG. 1). The control valve 8f is a solenoid valve or the like, and extends and retracts the lift cylinder 8e.

The front end of each lower link 8b is supported swingably upward or downward by the lower rear of the transmission 5. The front end of the top link 8c is supported swingably upward or downward above the lower link 8b by a rear portion of the transmission 5. The lift rod 8d connects the lift arm 8a and the lower link 8b. The working device 2 is connected to a rear portion of the lower link 8b and a rear portion of the top link 8c. When the lift cylinder 8e is driven (extended or retracted), the lift arm 8a is raised or lowered, and the lower link 8b connected to the lift arm 8a through the lift rod 8d is raised or lowered. Thus, the working device 2 is swung (raised or lowered) upward or downward around a front portion of the lower link 8b as a fulcrum.

As illustrated in FIG. 1, the remote working vehicle 1 includes the controller 21, a storage device (memory and/or storage) 22, a second communicator (in-vehicle communicator) 23, a position detector 24, a first detector (inertial measurement unit) 25, a second detector (sensing device) 26, a state detector 27, and a third detector 28. The remote working vehicle 1 also includes an in-vehicle network such as CAN, LIN, or FlexRay. The controller 21 is electrically connected through the in-vehicle network to the storage device 22, the second communicator 23, the position detector 24, the first detector 25, the second detector 26, the state detector 27, the third detector 28, and the like.

The controller 21 is an in-vehicle controller that includes an electronic control unit (ECU) including a processor 21a and a memory 21b. The controller 21 is a controller controlling the operation of the components of the remote working vehicle 1. The memory 21b includes a volatile or non-volatile memory or the like. The controller 21 controls an actuator group including electric or hydraulic motors, cylinders, and control valves to actuate the components of the remote working vehicle 1, such as the prime mover 4, the transmission 5, the traveling device 7, the brake system 13, and the linkage 8. The memory 21b of the controller 21 stores, in a readable and writable manner, various information and data for the controller 21 to control the operation of the components of the remote working vehicle 1. The storage device 22 is, e.g., a solid state drive (SSD), a hard disk drive (HDD), or the like.

The controller 21 controls the vehicle speed of the travel vehicle body 3 based on the input vehicle speed Vin from the input interface IP (for example, the accelerator pedal 11b).

The second communicator 23 includes an antenna, an integrated circuit (IC), and an electric circuit to perform wireless communication through a mobile-phone communication network, the Internet, or a wireless LAN. The controller 21 wirelessly communicates with the remote device 30 via the second communicator 23. In addition, the controller 21 includes a realtime clock (RTC), and can tell the date and time.

Note that in the present example embodiment, an example has been illustrated in which the remote working vehicle 1 and the remote device 30 communicate through a mobile-phone communication network or the like; however, alternatively, for example, the remote working vehicle 1 and the remote device 30 may communicate through a mobile-phone communication network and an external device such as a server or a relay. The remote working vehicle 1 and the remote device 30 may directly communicate by a short-range wireless signal such as Bluetooth (registered trademark) Low Energy (BLE) signal or an ultra high frequency (UHF) signal. In this case, the second communicator 23 and the remote device 30 should be provided with respective interfaces for short-range wireless communication.

The position detector 24 detects the position of itself (measured position information including the latitude and longitude) by utilizing a satellite positioning system. Specifically, the position detector 24 receives signals (positions of positioning satellites, time of sending, correction information and the like) transmitted from the positioning satellites, and detects the position of itself based on the signals. The position detector 24 may detect, as the position of itself, a position corrected based on correction signals and the like from base stations (reference stations) which can receive the signals from the positioning satellites. The position detector 24 may calculate the position of the remote working vehicle 1 based on the detected position of itself, and pre-stored external shape information of the remote working vehicle 1. The position detector 24 may calculate the position of the working device 2 based on the detected position of itself, pre-stored external shape information of the working device 2, and the mounting position of the working device 2 on the travel vehicle body 3.

The first detector 25 includes a gyroscope sensor or an acceleration sensor or the like, and detects the roll angle, the pitch angle, the yaw angle and the like of the remote working vehicle 1 (the travel vehicle body 3). In other words, the first detector 25 detects the posture of the remote working vehicle 1, inclined to the right and left and the front and rear with respect to a horizontal state.

The second detector 26 is a sensing device to sense (monitor) the surrounding area of the remote working vehicle 1. Specifically, the second detector 26 includes a laser sensor 26a, an ultrasonic sensor 26b, a camera 26c, and an object detector 26d. In the present example embodiment, the second detector 26 includes multiple laser sensors 26a and ultrasonic sensors 26b. The multiple laser sensors 26a and ultrasonic sensors 26b are respectively installed at predetermined positions such as a front portion, a rear portion, and right and left portions of the remote working vehicle 1 to detect the surrounding situation in front of, to the rear of, and on the right and left sides of the remote working vehicle 1, and an object (for example, an obstacle) within a predetermined target detection distance in the surroundings.

Each laser sensor 26a and each ultrasonic sensor 26b are an example of an object sensor. Note that multiple pieces of at least one of the laser sensor 26a or the ultrasonic sensor 26b may be provided in the second detector 26 as object sensors. Alternatively, multiple pieces of another object sensor may be provided in the second detector 26.

The laser sensor 26a includes an optical sensor such as a light detection and ranging (LiDAR) sensor. The laser sensor 26a emits millions of pulsed measurement light (laser light) per second from a light source such as a laser diode, and reflects the measurement light on a rotating mirror to scan in a horizontal direction or a vertical direction, thus projects the measurement light into a predetermined detection range (sensing range). The laser sensor 26a then receives, by a light receiving element, reflection light of the measurement light reflected by an object.

The object detector 26d includes an electric circuit or an IC that detects the presence or absence of an object, the position of an object, the type of an object, and the like based on received light signal output from the light receiving element of the laser sensor 26a. The object detector 26d detects the distance to an object based on the time since emission of measurement light by the laser sensor 26a until the measurement light is received (time of flight (TOF) method). The object detected by the object detector 26d includes the agricultural field on which the remote working vehicle 1 travels and performs work, the crops on the agricultural field, the ground surface, the inclination of the ground surface, other objects, and humans.

The ultrasonic sensor 26b includes an air-coupled ultrasonic sensor such as a sonar. The ultrasonic sensor 26b transmits measurement waves (ultrasonic waves) to a predetermined detection range by a transmitter, and receives, by a receiver, reflection waves of the measurement waves reflected by an object. The object detector 26d detects the presence or absence of an object, the position of an object, the type of an object, and the like based on the signal output from the receiver of the ultrasonic sensor 26b. The object detector 26d detects the distance to an object based on the time since transmission of measurement waves by the ultrasonic sensor 26b until reflection waves are received (TOF method).

The camera 26c includes a CCD camera on which a charge coupled device (CCD) image sensor is mounted, or a CMOS camera on which a complementary metal oxide semiconductor (CMOS) image sensor is mounted. As illustrated in FIG. 2, the cameras 26c are respectively installed at predetermined positions such as a front portion, a rear portion, right and left portions of the remote working vehicle 1, and the inside of a cabin 9 to capture an image of the surrounding area such as an area in front of, to the rear of, on the right and left sides of the remote working vehicle 1, and output data of the captured image. Each camera 26c is an example of an imaging device.

For example, as illustrated in FIG. 2, a camera 26c1 installed inside the cabin 9 captures an image in front of the remote working vehicle 1 from the operator's seat 10. More specifically, the camera 26c1 captures an image in front (in the travel direction, A1 direction) of the remote working vehicle 1 in approximately the same field of view as that of a user sitting on the operator's seat 10. That is, with the camera 26c1, a captured image of an area in the travel direction of the remote working vehicle 1 is obtained.

As illustrated in FIG. 2, the camera 26c2 installed at a rear portion of the travel vehicle body 3 of the remote working vehicle 1 captures an image to the rear of the remote working vehicle 1. More specifically, the camera 26c2 captures an image in the opposite direction (direction of the arrow Y2) of the field of view of a user sitting on the operator's seat 10. In other words, with the camera 26c2, an image capturing the area in the opposite direction to the travel direction of the remote working vehicle 1 is obtained.

The object detector 26d can also detect the presence or absence of an object, the position of an object, the type of an object, and the like based on the data of the captured image output from the camera 26c.

The second detector 26 senses (monitors) the surrounding situation of the remote working vehicle 1 and the working device 2 by the laser sensor 26a, the ultrasonic sensor 26b, the camera 26c, and the object detector 26d, and outputs sensing information indicating the results to the controller 21. The sensing information includes at least the information detected by the object detector 26d, the data of the image captured by the camera 26c, and the inclination in the surroundings, however, may include the information detected by the laser sensor 26a and the ultrasonic sensor 26b other than those.

The state detector 27 detects the operating state of the remote working vehicle 1. Specifically, the state detector 27 includes various sensors installed at corresponding positions of the remote working vehicle 1 (the travel vehicle body 3) and a computing unit, and the computing unit detects (calculates) the operating state of the remote working vehicle 1 based on the output signals from the various sensors. The operating state of the remote working vehicle 1 detected by the state detector 27 includes the state of drive and stop of each component of the remote working vehicle 1, and the travel direction, the traveling speed (the actual vehicle speed Vac), the acceleration, and the steering angle of the remote working vehicle 1. Note that among the components of the state detector 27, the component to detect the traveling speed (the actual vehicle speed Vac) of the remote working vehicle 1 corresponds to a vehicle speed acquirer 27a.

The state detector 27 acquires the position (position of the remote working vehicle 1) of the travel vehicle body 3, detected by the position detector 24 at a predetermined cycle, and may detect (calculate) the position of the working device 2 from the position of the travel vehicle body 3, and detect the change (transition) in the position of the travel vehicle body 3. Alternatively, the vehicle speed acquirer 27a may detect the traveling speed (the actual vehicle speed Vac) of the travel vehicle body 3 from the change in the position of the travel vehicle body 3. As another example, a revolution sensor (rotation speed sensor) is provided that detects the number of revolutions of the front wheels 7F and the rear wheels 7R of the traveling device 7, or the number of revolutions (rotation speed) of a traveling motor to rotate the front wheels 7F and the rear wheels 7R, and the vehicle speed acquirer 27a may detect the traveling speed (the actual vehicle speed Vac) of the travel vehicle body 3 based on the output signal from the revolution sensor. The steering system 14 is provided with a sensor, and the state detector 27 may detect the steering angle of the travel vehicle body 3 based on the output signal from the sensor.

The state detector 27 generates detection information indicating the detected operating state of the remote working vehicle 1, and outputs the detection information to the controller 21. For example, the detection information of the state detector 27 includes manipulation information of the remote working vehicle 1 and the working device 2. For example, the manipulation information includes at least information on the speed of the remote working vehicle 1, and further includes information on at least one of the acceleration of the remote working vehicle 1, the transmission switch position of the transmission 5, the braking position of the brake system 13, the operation position of the working device 2, or the steering angle of the travel vehicle body 3.

The third detector 28 (detector 28A) detects the state of the working device 2. The third detector 28 (detector 28A) detects, as the state of the working device 2, at least one of the position (for example, the height of the working device 2) of the working device 2, or the operation (for example, the number of revolutions of the PTO shaft 6) of the working device 2.

The third detector 28 includes various sensors installed at corresponding positions of the linkage 8 and the working device 2 and a computing unit, and the computing unit detects (calculates) the operating state of the working device 2 based on the output signals from the various sensors. The state of the working device 2, detected by the third detector 28, includes the type of the working device 2, the state of attachment/detachment of the working device 2, the state of drive and stop of each component of the working device 2, the inclination, height (for example, the ground height, or the device height relative to the remote working vehicle 1) of the working device 2, and the number of revolutions of the PTO shaft 6.

For example, the PTO shaft may be provided with a rotation sensor, and the third detector 28 (detector 28A) may detect the number of revolutions of the PTO shaft 6 based on the output signal from the rotation sensor. Note that the third detector 28 (detector 28A) may include a PTO revolution sensor to detect the number of revolutions of the PTO shaft 6, and may acquire the number of revolutions of the PTO shaft 6, detected by the PTO revolution sensor.

Note that when the type of the remote working vehicle 1 is a rice transplanter, the third detector 28 may detect the state of drive and stop of each structure related to seedling planting, the remaining amount of materials (seedling, fertilizer) and the like based on the output signals from various sensors installed at corresponding positions of a seedling planting device or the like. When the type of the remote working vehicle 1 is a combine, the third detector 28 may detect the state of drive and stop of each structure related to harvesting, characteristics of harvested grains and the like based on the output signals from various sensors installed at corresponding positions of a mower, a grain tank, and the like.

The position detector 24, the first detector 25, the state detector 27, and the third detector 28 output, to the controller 21 as needed, detection information indicating the results detected at a predetermined cycle or a predetermined timing. The second detector 26 also outputs, to the controller 21 as needed, sensing information indicating the results sensed at a predetermined cycle or a predetermined timing. The controller 21 stores, in the internal memory 21b, the detection information and the sensing information which have been input from the position detector 24, the state detector 27, the third detector 28, and the second detector 26.

For example, in a case of remote driving, the controller 21 sequentially transmits the above-mentioned detection information and sensing information stored in the internal memory 21b to the remote device 30 at a predetermined cycle or a predetermined timing by the second communicator 23.

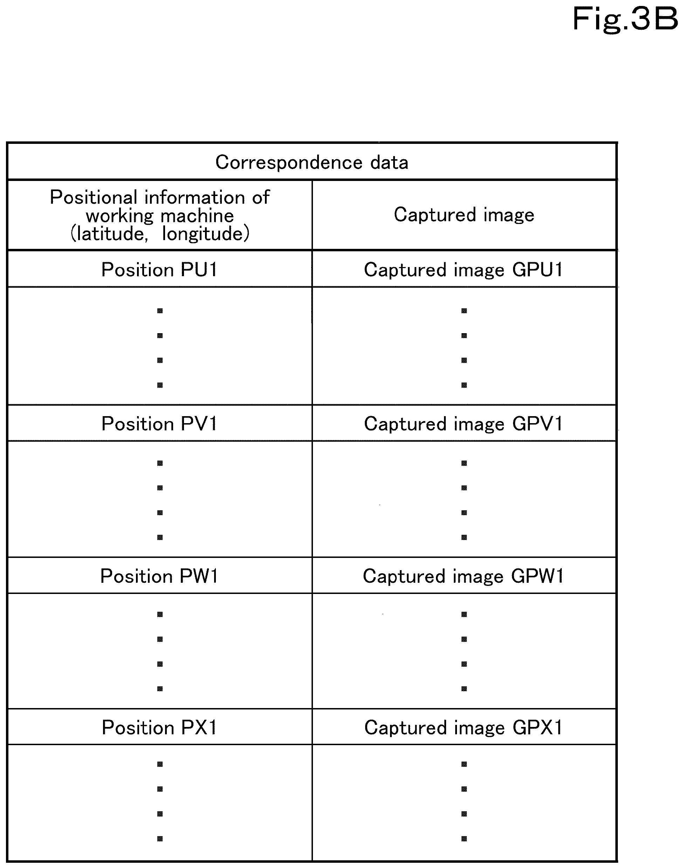

In this manner, the detection information and sensing information transmitted from the remote working vehicle 1 include correspondence data (see FIG. 3B) in which the positional information of the remote working vehicle 1 is associated with a captured image of an area in the travel direction of the remote working vehicle 1. FIG. 3B is a table illustrating an example of correspondence data. Specifically, correspondence data in which the detection information (that is, the positional information of the remote working vehicle 1) of the position detector 24 is associated with the sensing information (for example, the captured image taken by the camera 26c1) of the second detector 26 is sequentially transmitted to the remote device 30. Regarding the captured image, as illustrated in FIG. 3B, correspondence data in which the positional information (for example, positions PU1, PV1, PW1, and PX1) of the remote working vehicle 1 detected by the position detector 24 is associated with the captured image (for example, captured images GPU1, GPV1, GPW1, and GPX1) taken by the camera 26c1 is sequentially transmitted to the remote device 30.

The controller 21 communicates with a control unit (controller) 2a included in the working device 2 to cause the control unit 2a to control the operation of the working device 2. In other words, the controller 21 performs work on an agricultural field by controlling the operation of the working device 2 through the control unit 2a. For example, the control unit 2a includes a CPU, a memory and the like. Note that some working devices 2 may not include the control unit 2a. In this case, the controller 21 controls the position of the working device 2 by the linkage 8, and performs work on an agricultural field by the working device 2.

The controller 21 controls traveling of the remote working vehicle 1, work performed by the working device 2, and other operations of the remote working vehicle 1 based on the detection information acquired from the first detector 25, the second detector 26, the state detector 27, the third detector 28 and the like. When a remote manipulation signal transmitted from the remote device 30 is received at the second communicator 23, the controller 21 controls traveling of the remote working vehicle 1, work performed by the working device 2, and other operations of the remote working vehicle 1 based on the remote manipulation signal in addition to the above-mentioned information.

In addition, when controlling the traveling of the remote working vehicle 1 or the work performed by the working device 2, the controller 21 determines from the detection information of the object detector 26d whether an object approaches at a distance of less than a predetermined distance from the remote working vehicle 1 or the working device 2, and may be at risk of contacting it. When determining that an object approaches at a distance of less than a predetermined distance from the remote working vehicle 1 or the working device 2, and may be at risk of contacting it, the controller 21 controls the traveling device 7, the working device 2, or the like to automatically reduce the traveling speed of the remote working vehicle 1, or automatically stop the traveling and/or the working, thus avoiding contact with the object.

Next, the remote device 30 will be described. As illustrated in FIG. 1, the remote device 30 is located at a position away from the remote working vehicle 1. With the remote device 30, the remote working vehicle 1 can be remotely manipulated (or remotely operated, or remotely controlled) by a human remote manipulator (human operator), and the state of the remote working vehicle 1, the surrounding situation of the remote working vehicle 1, and the like can be monitored. The remote device 30 includes a controller 31, a storage device (memory and/or storage) 32, a first communicator 33, a display DP, and a remote manipulator 35.

The controller 31 is a processor to control the operation of the components of the remote device 30. The processor functions as the controller 31 that controls the operation of the components of the remote device 30, for example, by executing a remote control program stored in the storage device 32. The controller 31 may be implemented by hardware included in an integrated circuit (IC chip) or the like, or may be implemented by software using a computer. In the latter case, the computer includes: a recording medium in which a program that is software implementing the functions of the controller 31 and various data related to the remote working vehicle 1 are recorded in a computer-readable manner; an arithmetic circuit such as a central processing unit (CPU) that executes the commands of the program; and a random access memory (RAM) for loading the program and various data. The functions of the controller 31 are implemented by the arithmetic circuit reading the program from the recording medium and executing the program.

An internal memory 31a provided in the controller 31 is a volatile or non-volatile memory. The internal memory 31a stores, in a readable and writable manner, various information and data for controlling the operation of the components of the remote device 30 by the controller 31.

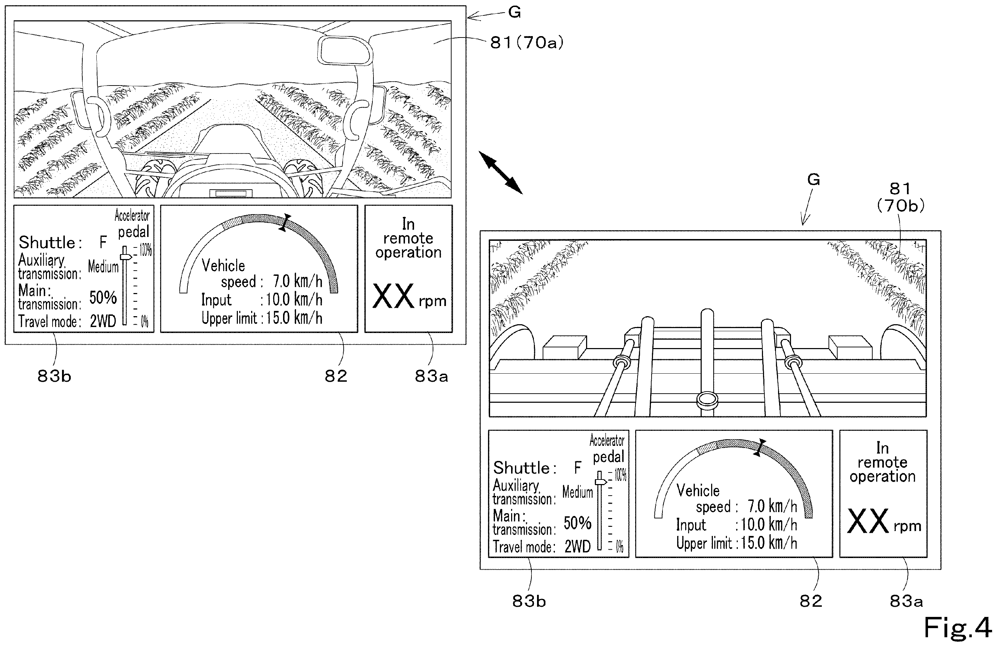

The controller 31 includes a display controller 31b. For example, the processor functions as the display controller 31b by executing a display control program stored in the storage device 32 or the internal memory 31a. The display controller 31b may include hardware provided in an integrated circuit (IC chip) or the like. The display controller 31b performs display control on the display DP. For example, the display controller 31b displays, on the display DP, a display screen G (see the below-referenced FIG. 4 and the like) showing information related to the remote driving.

The storage device 32 pre-stores applications such as a remote control program for remotely driving the remote working vehicle 1, and a remote monitoring program for remotely monitoring the remote working vehicle 1, various data, and the like. The storage device 32 is, e.g., a solid state drive (SSD), a hard disk drive (HDD), or the like.

The first communicator 33 includes an antenna, an IC, and an electric circuit to perform wireless communication through a mobile-phone communication network, the Internet, or a wireless LAN. The first communicator 33 can wirelessly communicate with the remote working vehicle 1 under the control of the controller 31. The first communicator 33 receives various data (such as the detection information of the position detector 24, the first detector 25, the state detector 27, and the third detector 28, and the sensing information of the second detector 26) transmitted from the second communicator 23. For example, the first communicator 33 receives correspondence data in which the positional information of the remote working vehicle 1 is associated with a captured image of an area in the travel direction of the remote working vehicle 1.

The display DP is, for example, a liquid crystal display, an organic electroluminescent display, or the like. The display DP displays various information for remotely operating the remote working vehicle 1. For example, the display DP displays the display screen G showing information related to remote driving based on the display control (display control signal) by the display controller 31b. The details of the display screen G will be described below.

The remote manipulator 35 is a device to remotely manipulate the remote working vehicle 1, and receives an operation of a human remote manipulator. The remote manipulator 35 includes a steering wheel (steering handle) 35a, an input interface IP for remote operation (i.e., remote input interface) (for example, an accelerator pedal 35b) , a brake pedal 35c, a speed-change operation element (transmission operation element) 35d, and a forward/rearward travel switch lever 35e, and these are provided around a human remote manipulator's seat. The input interface IP for remote operation is, for example, the accelerator pedal 35b, and indicates the input vehicle speed Vin of the remote working vehicle 1 (the travel vehicle body 3) according to an input operation by a human remote manipulator (user). Note that the input interface IP for remote operation may be a hand accelerator operated by a hand of a human remote manipulator. The display DP includes a touch panel, and the input interface IP for remote operation may be configured to receive input of a touch operation (for example, indication or change of the input vehicle speed Vin) performed on the display DP by a human remote manipulator.

With regard to the remote manipulator 35, a human remote manipulator sits in a human remote manipulator's seat and operates the remote manipulator 35, and thus remotely manipulates the traveling of the remote working vehicle 1 or the work performed by the working device 2. The human remote manipulator monitors the remote working vehicle 1 and the surrounding situation by the display DP. The human remote manipulator can input predetermined information or instruction to the remote device 30 by operating the remote manipulator 35. Note that the remote manipulator 35 may be a touchpad, a hardware switch, or the like.

The steering wheel 35a, the input interface IP (the accelerator pedal 35b) for remote operation, the brake pedal 35c, the speed-change operation element 35d, and the forward/rearward travel switch lever 35e have the same configuration as the steering wheel 11a, the input interface IP (the accelerator pedal 11b), the brake pedal 11c, the speed-change operation element 11d, and the operation member 11e of the remote working vehicle 1.

The speed-change operation element 35d includes: an auxiliary speed-change operation element (auxiliary transmission operation element) 35d1 to remotely provide a transmission instruction to the auxiliary transmission unit of the remote working vehicle 1 by a human remote manipulator; and a main speed-change operation element 35d2 to remotely provide a transmission instruction to the main transmission unit of the remote working vehicle 1 by a human remote manipulator.

The forward/rearward travel switch lever 35e is for a human remote manipulator to remotely provide an instruction to cause the remote working vehicle 1 to travel forward or rearward. Specifically, the forward/rearward travel switch lever 35e receives: a first operation to switch the travel direction of the traveling device 7 to forward (direction of the arrow Y1 of FIG. 2); a second operation to switch the travel direction of the traveling device 7 to rearward (direction of the arrow Y2 of FIG. 2); and a third operation other than the first operation and the second operation to switch the traveling device 7 to neutral.

As illustrated in FIG. 1, the remote device 30 may include a display terminal 70 and the remote manipulator 35. That is, the display terminal 70 may be a terminal device including the controller 31, the storage device 32, the first communicator 33, and the display DP. As the display terminal 70, for example, a tablet device or a portable terminal device such as a smartphone, and a desktop computer installed in a base station may be mentioned.

When a human remote manipulator operates the remote manipulator 35 to input an operation instruction for the remote working vehicle 1, the controller 31 generates a remote manipulation signal corresponding to the operation instruction, and transmits the remote manipulation signal to the remote working vehicle 1 by the first communicator 33. In other words, a remote manipulation signal according to an operation of the steering wheel 35a, the input interface IP (the accelerator pedal 35b) for remote operation, the brake pedal 35c, the speed-change operation element 35d, and the forward/rearward travel switch lever 35e is transmitted to the remote working vehicle 1. When receiving a remote manipulation signal from the remote device 30 by the second communicator 23, the controller 21 of the remote working vehicle 1 operates the components of the remote working vehicle 1 based on the remote manipulation signal, the detection information of the position detector 24, the sensing information of the second detector 26, and the detection information of the state detector 27, and controls the travel and steering of the remote working vehicle 1, and controls the working operation by the working device 2.

The controller 21 periodically transmits the detection information of the position detector 24, the first detector 25, the state detector 27, and the third detector 28, and the sensing information of the second detector 26 to the remote device 30 by the second communicator 23. When receiving the detection information and the sensing information by the first communicator 33, the controller 31 of the remote device 30 stores this information in the internal memory 31a and/or displays the information on the display DP.

The controller 31 (display controller 31b) displays, on the display DP, the display screen G showing information related to remote driving. The display DP displays the display screen G based on the display control signal from the controller 31 (display controller 31b). Specifically, the display controller 31b converts the information related to the remote driving into a data format (image) displayable on the display DP. The display controller 31b outputs a display control signal to the display DP, and displays the display screen G, the display control signal indicating the converted image and the display position of the image on the display DP.

FIG. 4 illustrates an example of the display screen G of the display DP in the remote device 30. As illustrated in FIG. 4, the display controller 31b displays the display screen G on the display DP. The display screen G includes an image display portion 81, a meter image display portion 82, a first state display portion 83a, and a second state display portion 83b.

When the forward/rearward travel switch lever 35e is in the forward travel position or the neutral position, the display controller 31b displays, on the image display portion 81, a first captured image 70a showing an area in front of the remote working vehicle 1. The first captured image 70a is an image of an area in front of the remote working vehicle 1 in a driver's perspective, the image being captured by the camera 26c1 (FIG. 2) installed in the cabin 9 among multiple cameras 26c provided in the remote working vehicle 1.

Meanwhile, when the forward/rearward travel switch lever 35e is in the rearward travel position, the display controller 31b displays, on the image display portion 81, a second captured image 70b showing an area to the rear of the remote working vehicle 1. The second captured image 70b is an image of an area to the rear of the remote working vehicle 1, the image being captured by the camera 26c2 (FIG. 2) installed at a rear portion of the travel vehicle body 3.

The display controller 31b displays, on the meter image display portion 82, a meter image indicating the traveling speed (the actual vehicle speed Vac) and the like of the remote working vehicle 1 (the travel vehicle body 3) in a meter display format.

The display controller 31b displays a first state and a second state detected by the first detector 25 and the controller 21 of the remote working vehicle 1 on the first state display portion 83a and the second state display portion 83b, the first state and the second state indicating the state of the remote working vehicle 1. The first state display portion 83a displays whether the remote working vehicle 1 is in travel by remote operation, the number of revolutions of the prime mover 4 of the remote working vehicle 1 (the travel vehicle body 3), and the like. The second state display portion 83b displays the travel direction (forward travel, rearward travel, neutral) of the traveling device 7, the state (for example, the transmission stage) of the auxiliary transmission of the transmission 5, the state (for example, the transmission stage) of the main transmission, the travel mode (for example, 2WD) of the remote working vehicle 1, and the amount of operation of the accelerator pedals 11b and 35b.

Note that the display screen G illustrated in FIG. 4 is an example. The position, size, range, display content, and the like of the image display portion 81, the meter image display portion 82, the first state display portion 83a, and the second state display portion 83b are not limited to those of the display screen G in FIG. 4.

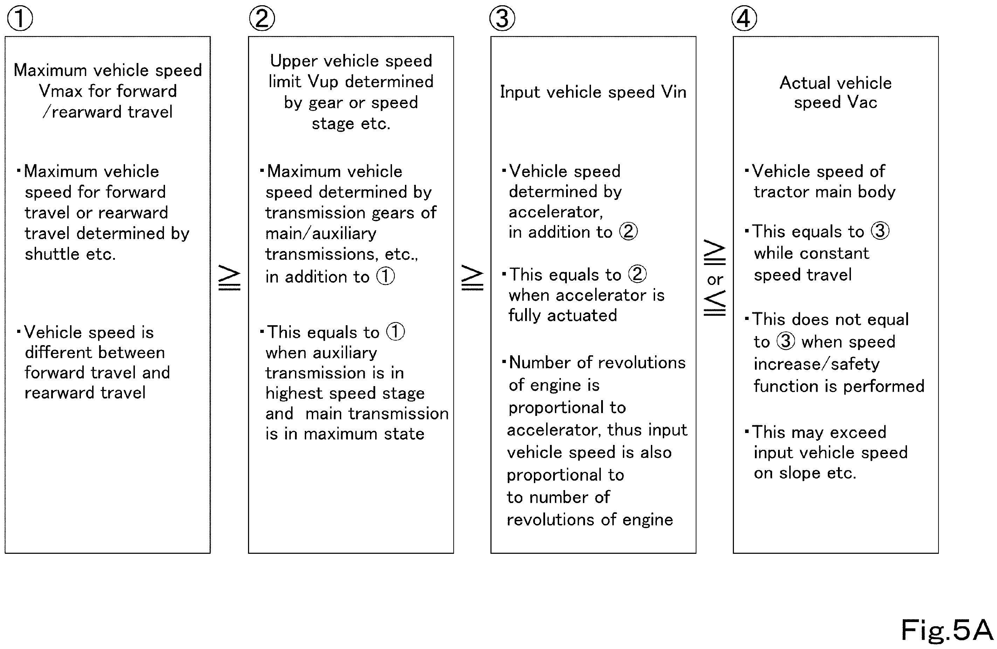

FIG. 5A is a chart illustrating a relationship between a maximum vehicle speed Vmax, an upper vehicle speed limit Vup, an input vehicle speed Vin, and an actual vehicle speed Vac of the remote working vehicle 1. As illustrated in FIG. 5A, the controller 21 can acquire each of the maximum vehicle speed Vmax of the remote working vehicle 1, the upper vehicle speed limit Vup determined by the shift state of the transmission 5, the input vehicle speed Vin from the input interface IP (or the input interface IP of the manipulator 11) for remote operation, and the actual vehicle speed Vac of the remote working vehicle 1. These have the following relationship: the maximum vehicle speed Vmax ≥ the upper vehicle speed limit Vup ≥ the input vehicle speed Vin ≥ the actual vehicle speed Vac (note that on a downhill or the like, the input vehicle speed Vin ≤ the actual vehicle speed Vac may be satisfied).

The maximum vehicle speed Vmax of the remote working vehicle 1 refers to a predetermined maximum vehicle speed Vmax for forward travel of the travel vehicle body 3, as well as a predetermined maximum vehicle speed Vmax for rearward travel of the travel vehicle body 3. The maximum vehicle speed Vmax for forward travel and rearward travel is determined by the specifications of the remote working vehicle 1, and may be described, for example, in main specification data. The storage device 22 pre-stores the maximum vehicle speed Vmax for forward travel and rearward travel. The maximum vehicle speed Vmax varies with the model of the remote working vehicle 1. As an example, the maximum vehicle speed Vmax for forward travel is 32 [km/h], and the maximum vehicle speed Vmax for rearward travel is 25 [km/h] which are different values between the forward and rearward travel, but both may be the same value, and are not limited to these values.

The controller 21 acquires a predetermined maximum vehicle speed Vmax for forward travel or rearward travel of the travel vehicle body 3 based on an instruction for forward travel or rearward travel to the operation member 11e (for example, a shuttle lever). For example, when the operation member 11e is in the forward travel position, the controller 21 acquires the maximum vehicle speed Vmax for forward travel from the storage device 22, and when the operation member 11e is in the rearward travel position, the controller 21 acquires the maximum vehicle speed Vmax for rearward travel from the storage device 22. Note that information related to speed including the maximum vehicle speed Vmax may be stored in the storage device 32 included in the remote device 30, and the controller 21 may acquire the information related to speed from the storage device 32.

The upper vehicle speed limit Vup is an achievable vehicle speed determined by the shift state of the transmission 5. For example, the upper vehicle speed limit Vup is the upper vehicle speed limit (the maximum vehicle speed for each shift state) determined by transmission (speed-stage) gears (speed stages, transmission gear ratios) of the auxiliary transmission unit and the main transmission unit, etc. When the auxiliary transmission is in the highest speed stage and the main transmission is in the maximum state, the upper vehicle speed limit Vup matches the maximum vehicle speed Vmax mentioned above. Specifically, when the auxiliary speed-change operation element 11d1 is in the "high" position and the main speed-change operation element 11d2 is in the maximum operation position ("10" position), the upper vehicle speed limit Vup matches the maximum vehicle speed Vmax mentioned above.

The controller 21 can calculate the upper vehicle speed limit Vup based on the transmission gear ratio of the auxiliary transmission unit and the main transmission unit. A relationship between each of various combinations of the auxiliary transmission unit and the main transmission unit, and the vehicle speed in the combination may be pre-stored in the storage device 22 as a data table, and the controller 21 may acquire a vehicle speed corresponding to a combination of the auxiliary transmission unit and the main transmission unit from the data table.

For example, the controller 21 may be configured or programmed to calculate the upper vehicle speed limit Vup using the following (Expression 1). 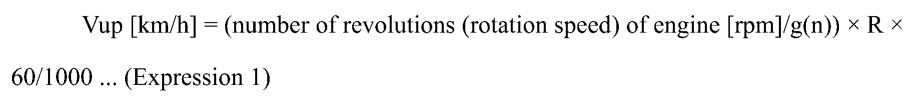 Vup [km/h] = (number of revolutions (rotation speed) of engine [rpm]/g(n)) × R × 60/1000 (Expression 1) Where g(n) is the transmission gear ratio when the n-th speed stage is selected. R is the circumference [m] of a driving wheel (for example, the rear wheel 7R).

The input vehicle speed Vin is the vehicle speed (that is, the indicated vehicle speed) determined by the input interface IP (for example, the accelerator pedal 11b) or the input interface IP (for example, the accelerator pedal 35b) for remote operation. With the maximum operation of the accelerator pedal 11b or the accelerator pedal 35b, the input vehicle speed Vin matches the upper vehicle speed limit Vup mentioned above. Note that the number of revolutions of the prime mover 4 is proportional to the accelerator pedal 11b or the accelerator pedal 35b, thus the input vehicle speed Vin is also proportional to the number of revolutions of the prime mover 4.

The actual vehicle speed Vac of the remote working vehicle 1 refers to the vehicle speed of the remote working vehicle 1. When the remote working vehicle 1 travels at a constant speed, the actual vehicle speed Vac matches the input vehicle speed Vin mentioned above. Note that in a case of, for example, speed increase or satisfaction of a predetermined speed-reduction condition (for example, activation of a safety function due to detection of an obstacle by the second detector 26), the actual vehicle speed Vac becomes lower than the input vehicle speed Vin, thus the actual vehicle speed Vac does not match the input vehicle speed Vin. Note that on a downward inclined slope such as a downhill, the actual vehicle speed Vac may exceed the input vehicle speed Vin.

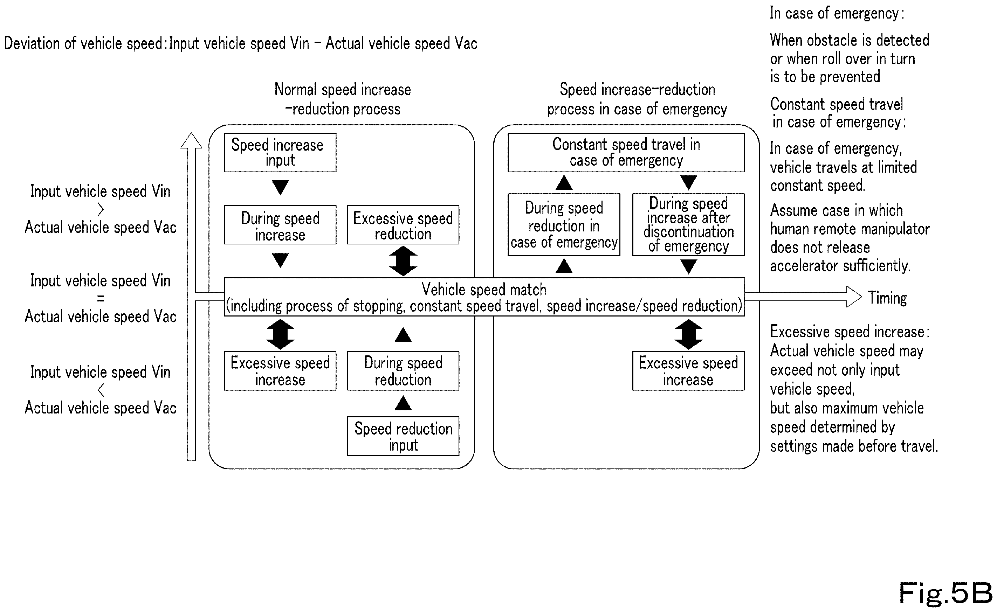

FIG. 5B is a chart for explaining transition of the actual vehicle speed Vac of the remote working vehicle 1 with respect to the input vehicle speed Vin. As illustrated in FIG. 5B, a speed increase-reduction process of the remote working vehicle 1 includes a normal speed increase-reduction process and a speed increase-reduction process in case of emergency (in case of anomaly).

First, the normal speed increase-reduction process will be described. As illustrated in FIG. 5B, in an initial state where the input vehicle speed Vin is provided from the accelerator pedal 11b or the accelerator pedal 35b, speed increase input is being made, and speed increase of the remote working vehicle 1 is being performed, thus a relationship of the input vehicle speed Vin > the actual vehicle speed Vac is satisfied. When a relationship of the input vehicle speed Vin = the actual vehicle speed Vac is satisfied, that is, when both vehicle speeds match, constant speed travel is achieved. When a relationship of the input vehicle speed Vin < the actual vehicle speed Vac is satisfied, if an operation (release operation) of lifting off the accelerator pedal 11b or the accelerator pedal 35b is performed, in other words, speed reduction input is being made, the remote working vehicle 1 is in speed reduction, thus when a relationship of the input vehicle speed Vin = the actual vehicle speed Vac is satisfied, that is, when both vehicle speeds match, constant speed travel is achieved.

Next, the speed increase-reduction process in case of emergency will be described. For example, when a relationship of the input vehicle speed Vin = the actual vehicle speed Vac is satisfied, that is, during constant speed travel of the remote working vehicle 1, when the predetermined speed-reduction condition is satisfied (for example, a safety function is activated due to detection of an obstacle by the second detector 26), the speed of the remote working vehicle 1 is reduced, resulting in speed reduction in case of emergency, and low speed (for example, [2 km/h]) travel in case of emergency. When the predetermined speed-reduction condition is not satisfied (for example, an obstacle is no longer detected by the second detector 26), speed increase (speed increase to cause the actual vehicle speed Vac to match the input vehicle speed Vin) is performed after discontinuation of emergency, then speed increase after discontinuation of emergency is being performed, and when a relationship of the input vehicle speed Vin = the actual vehicle speed Vac is satisfied, that is, when both vehicle speeds match, constant speed travel is achieved.

The display DP of the remote device 30 displays the input vehicle speed Vin indicated by the input interface IP for remote operation, and the actual vehicle speed Vac, the maximum vehicle speed Vmax, and the upper vehicle speed limit Vup of the remote working vehicle 1 received by the first communicator 33. Specifically, the vehicle speed acquirer 27a acquires the actual vehicle speed Vac of the remote working vehicle 1. The second communicator 23 transmits actual vehicle speed information indicating the actual vehicle speed Vac acquired by the vehicle speed acquirer 27a, the maximum vehicle speed Vmax, and the upper vehicle speed limit Vup to the first communicator 33. The controller 31 (display controller 31b) of the remote device 30 acquires the actual vehicle speed Vac, the maximum vehicle speed Vmax, and the upper vehicle speed limit Vup of the remote working vehicle 1 based on the actual vehicle speed information received at the first communicator 33. As illustrated in FIG. 4, the display controller 31b displays the actual vehicle speed Vac, the maximum vehicle speed Vmax, and the upper vehicle speed limit Vup of the remote working vehicle 1 on the meter image display portion 82 of the display DP.

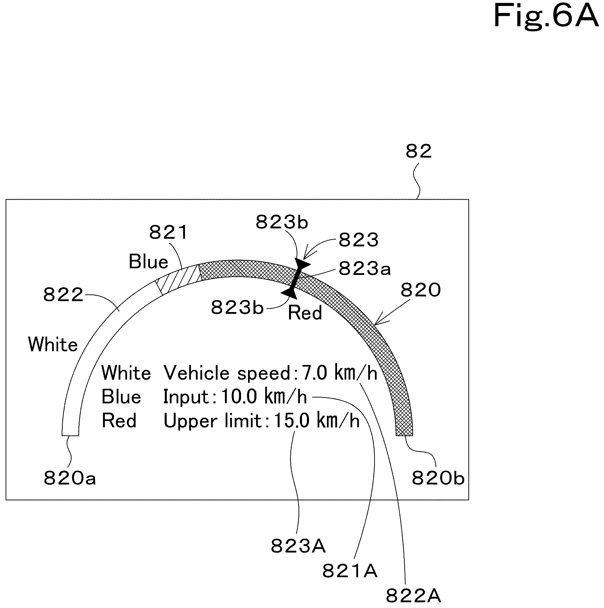

FIG. 6A illustrates a first example of the meter image display portion 82. As illustrated in FIG. 6A, the meter image display portion 82 displays a meter image indicating the traveling speed (the actual vehicle speed Vac) of the remote working vehicle 1 (the travel vehicle body 3), and the input vehicle speed Vin indicated by the input interface IP (the accelerator pedal 35b) for remote operation in a meter display format.

Specifically, as illustrated in FIG. 6A, the meter image display portion 82 includes a semi-circular bar indication portion 820 indicating a vehicle speed. In the semi-circular bar indication portion 820, one end 820a (for example, the left end) of its circular path indicates "zero" vehicle speed, and the other end 820b (for example, the right end) opposite to the one end 820a indicates the "maximum" vehicle speed, that is, the maximum vehicle speed Vmax.

The display DP (the meter image display portion 82) displays a first bar indication 821 indicative of the input vehicle speed Vin such that the first bar indication 821 overlaps the bar indication portion 820. As with the bar indication portion 820, the first bar indication 821 is a circular (arc-shaped) bar indication. The display DP (the meter image display portion 82) displays a second bar indication 822 indicative of the actual vehicle speed Vac such that the second bar indication 822 overlaps the bar indication portion 820. As with the bar indication portion 820, the second bar indication 822 is a circular (arc-shaped) bar indication.

The display DP (the meter image display portion 82) displays the first bar indication 821 indicative of the input vehicle speed Vin and the second bar indication 822 indicative of the actual vehicle speed Vac such that the first bar indication 821 and the second bar indication 822 at least partially overlap each other. For example, the bar indication portion 820, the first bar indication 821, and the second bar indication 822 have a layered structure in which the indications are displayed in an overlapping manner. Specifically, the bar indication portion 820 is a first layer, the first bar indication 821 is a second layer over the bar indication portion 820, and the second bar indication 822 is a third layer over the first bar indication 821. Thus, of the bar indication portion 820, the portion overlapping with the first bar indication 821 or the second bar indication 822 is hidden under the first bar indication 821 or the second bar indication 822 and invisible. Of the first bar indication 821, the portion overlapping with the second bar indication 822 is hidden under the second bar indication 822 and invisible.

The controller 21 acquires the upper vehicle speed limit Vup that is achievable in the current shift state of the transmission 5. The display DP (the meter image display portion 82) displays the upper vehicle speed limit Vup with the input vehicle speed Vin and the actual vehicle speed Vac. As illustrated in FIG. 6A, the display DP (the meter image display portion 82) displays an upper-limit indication 823 indicative of the upper vehicle speed limit Vup such that at least a portion of the upper-limit indication 823 is not hidden by the first bar indication 821 or the second bar indication 822. For example, the upper-limit indication 823 includes a line segment 823a in a width direction of the bar indication portion 820, and a pair of triangle marks 823b with vertices located at both ends of the line segment 823a. The line segment 823a is displayed at a position in the bar indication portion 820, the position indicating the upper vehicle speed limit Vup. The pair of triangle marks 823b are located at positions outside the bar indication portion 820, thus are not hidden by the first bar indication 821 or the second bar indication 822.

In a case of forward travel of the travel vehicle body 3, the display DP displays the input vehicle speed Vin, the actual vehicle speed Vac, the upper vehicle speed limit Vup, and the maximum vehicle speed Vmax for forward travel. As illustrated in FIG. 6A, in a case of forward travel of the travel vehicle body 3, the meter image display portion 82 displays the first bar indication 821 corresponding to the input vehicle speed Vin, the second bar indication 822 corresponding to the actual vehicle speed Vac, the upper-limit indication 823 corresponding to the upper vehicle speed limit Vup, and the other end 820b indicating the maximum vehicle speed Vmax for forward travel.

In a case of rearward travel of the travel vehicle body 3, the display DP displays the input vehicle speed Vin, the actual vehicle speed Vac, the upper vehicle speed limit Vup, and the maximum vehicle speed Vmax for rearward travel. For example, in a case of rearward travel of the travel vehicle body 3, the meter image display portion 82 displays the first bar indication 821 corresponding to the input vehicle speed Vin, the second bar indication 822 corresponding to the actual vehicle speed Vac, the upper-limit indication 823 corresponding to the upper vehicle speed limit Vup, and the other end 820b indicating the maximum vehicle speed Vmax for rearward travel.

For example, in a case of forward travel of the remote working vehicle 1, the other end 820b indicates the maximum vehicle speed Vmax (= 32 [km/h]) for forward travel, and in a case of rearward travel of the remote working vehicle 1, the other end 820b indicates the maximum vehicle speed Vmax (= 25 [km/h]). Thus, the vehicle speed per unit length (or unit angle) of the bar indication portion 820 is different between forward travel and rearward travel of the remote working vehicle 1. Note that the vehicle speed per unit length (or unit angle) of the bar indication portion 820 may be the same. In this case, the other end 820b for rearward travel is at a position (position indicating 25 [km/h]) closer to the one end 820a than the position (position indicating 32 [km/h]) of the other end 820b for forward travel by the length (the difference of 7 [km/h]) of a predetermined distance.

As illustrated in FIG. 6A, the display DP (the meter image display portion 82) further displays a first numerical indication 821A indicative of the input vehicle speed Vin, a second numerical indication 822A indicative of the actual vehicle speed Vac, and a third numerical indication 823A indicative of the upper vehicle speed limit Vup. In FIG. 6A, the first numerical indication 821A indicative of the input vehicle speed Vin displays "Input: 10.0 km/h". The second numerical indication 822A indicative of the actual vehicle speed Vac displays "Vehicle speed: 7.0 km/h". The third numerical indication 823A indicative of the upper vehicle speed limit Vup displays "Maximum: 15.0 km/h".

As illustrated in FIG. 6A, the display DP displays the first numerical indication 821A and the first bar indication 821 in a first common display manner (for example, in blue), displays the second numerical indication 822A and the second bar indication 822 in a second common display manner (for example, in white), and displays the upper-limit indication 823 and the third numerical indication 823A which are indicative of the upper vehicle speed limit Vup in a third common display manner (for example, in red). Note that the first numerical indication 821A may be indicative of, for example, only the numerical value "10.0" in blue. The second numerical indication 822A may be indicative of, for example, only the numerical value "7.0" in white. The third numerical indication 823A may be indicative of, for example, only the numerical value "15.0" in red.

Note that the first common display manner, the second common display manner, and the third common display manner are blue, white, and red, respectively, but this combination and the colors are not limited to these. The first common display manner, the second common display manner, and the third common display manner may be, for example, patterns (the patterns of the first bar indication 821, the second bar indication 822, and the upper-limit indication 823) instead of colors.

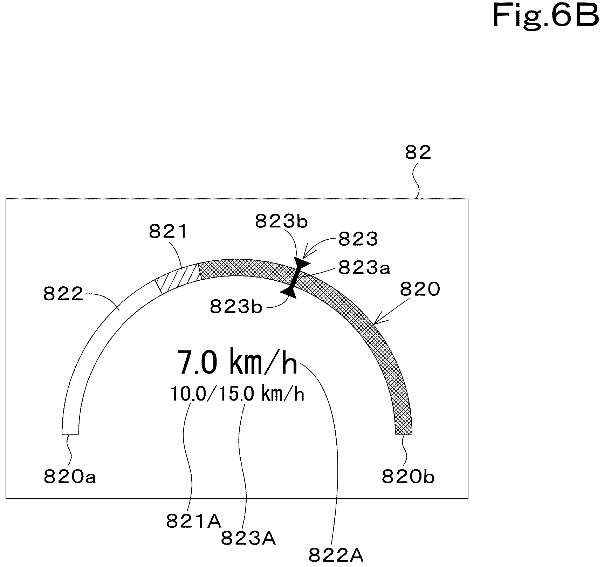

FIG. 6B illustrates a second example of the meter image display portion 82. As illustrated in FIG. 6B, the meter image display portion 82 may display only numerical values for the first numerical indication 821A, the second numerical indication 822A, and the third numerical indication 823A. For example, the first numerical indication 821A indicative of the input vehicle speed Vin displays "10.0 km/h", and does not display the character and symbol in "Input:". The second numerical indication 822A indicative of the actual vehicle speed Vac displays "7.0 km/h", and does not display the character and symbol in "Vehicle speed:". The third numerical indication 823A indicative of the upper vehicle speed limit Vup displays "15.0 km/h", and does not display the character and symbol in "Maximum:".

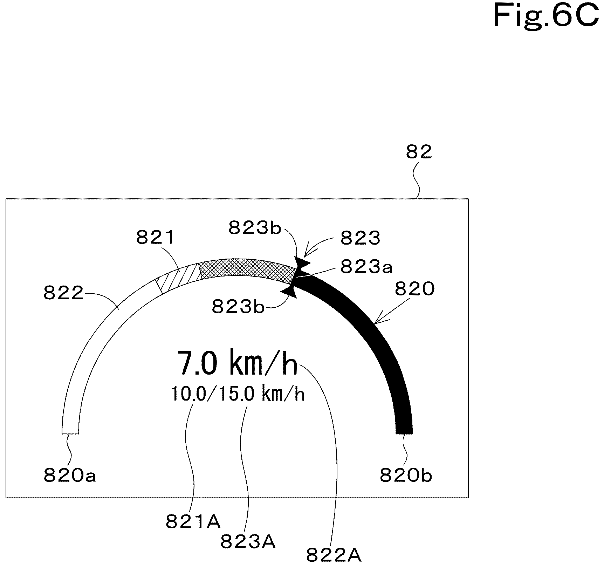

FIG. 6C illustrates a third example of the meter image display portion 82. As illustrated in FIG. 6C, the meter image display portion 82 may display the range from the upper-limit indication 823 to the other end 820b (for example, the right end) in the bar indication portion 820 in a different manner (for example, display filled in black, or semi-transparent display) from the manner of the range from the one end 820a to the upper-limit indication 823 in the bar indication portion 820, the first bar indication 821 and the second bar indication 822.

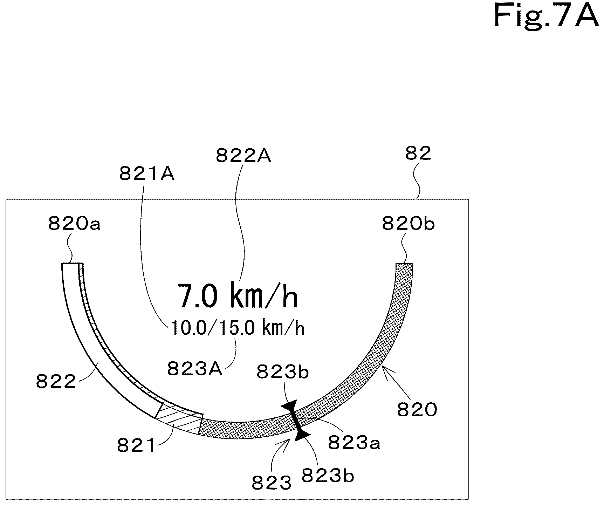

FIG. 7A illustrates a fourth example of the meter image display portion 82. The meter image display portion 82 may display a lower semi-circular bar indication portion 820 as illustrated in FIG. 7A instead of the upper semi-circular bar indication portion 820 illustrated in FIG. 6A to FIG. 6C.

As illustrated in FIG. 7A, the meter image display portion 82 may display the inner circumferential portion (for example, the radially inner edge portion closer to the first numerical indication 821A than the opposite edge portion) of the first bar indication 821 such that the inner circumferential portion protrudes inward relative to the inner circumferential portion of the second bar indication 822. On the contrary, the meter image display portion 82 may display the outer circumferential portion of the first bar indication 821 such that the outer circumferential portion protrudes outward relative to the outer circumferential portion of the second bar indication 822. In these cases, the first bar indication 821 can be prevented from being hidden behind the second bar indication 822 and completely invisible.

The meter image display portion 82 may display the inner circumferential portion (for example, the peripheral edge closer to the second numerical indication 822A) of the second bar indication 822 such that the inner circumferential portion extends from the inner circumferential portion of the first bar indication 821. Conversely, the meter image display portion 82 may display the outer circumferential portion of the second bar indication 822 such that the outer circumferential portion extends from the outer circumferential portion of the first bar indication 821. In these cases, the second bar indication 822 can be prevented from being completely hidden behind the first bar indication 821 and invisible.

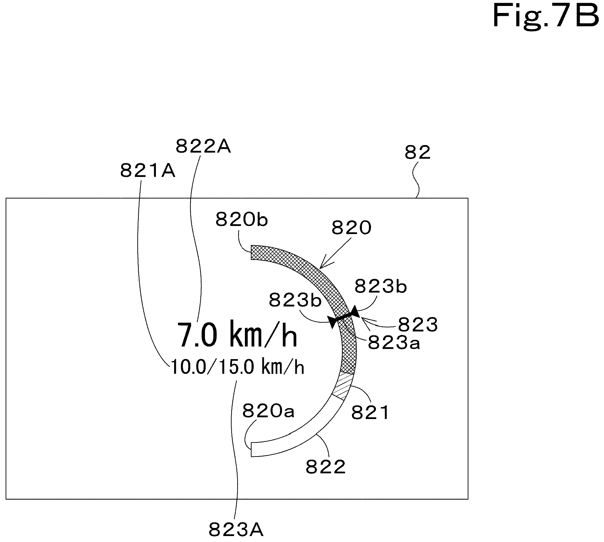

FIG. 7B illustrates a fifth example of the meter image display portion 82. As illustrated in FIG. 7B, the meter image display portion 82 may display a right semi-circular bar indication portion 820. The meter image display portion 82 may display a left semi-circular bar indication portion 820.

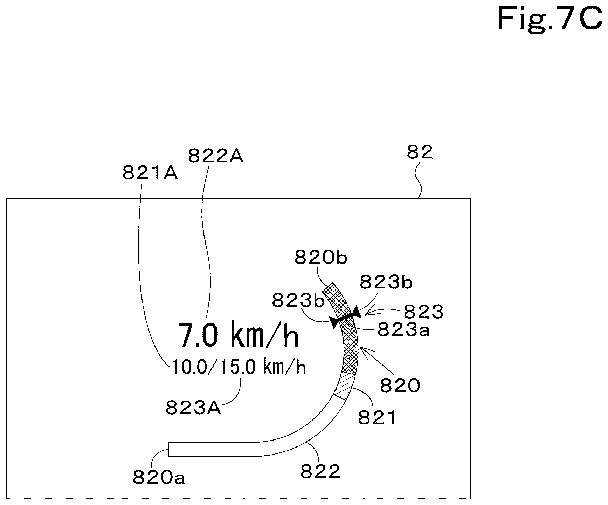

FIG. 7C illustrates a sixth example of the meter image display portion 82. As illustrated in FIG. 7C, the meter image display portion 82 may display a bar indication portion 820 including a line segment extending rightward, and an arc-shaped portion pointing upward from the line segment.

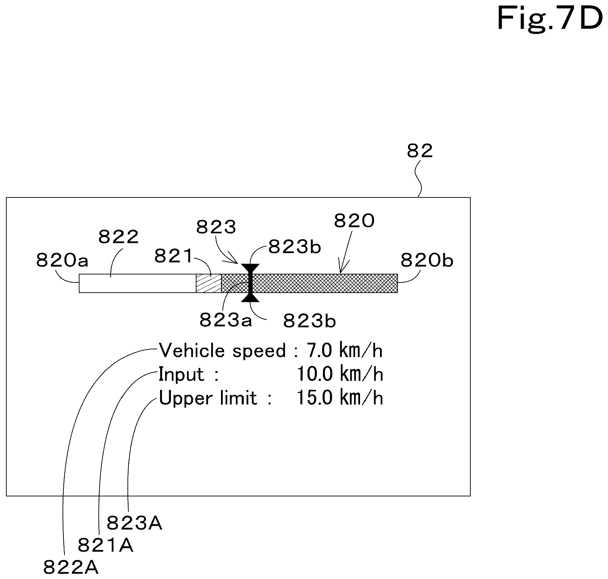

FIG. 7D illustrates a seventh example of the meter image display portion 82. As illustrated in FIG. 7D, the meter image display portion 82 may display a horizontal rod-shaped bar indication portion 820. The meter image display portion 82 may display a vertical rod-shaped bar indication portion 820 obtained by rotating the horizontal rod-shaped bar indication portion 820 90 degrees.

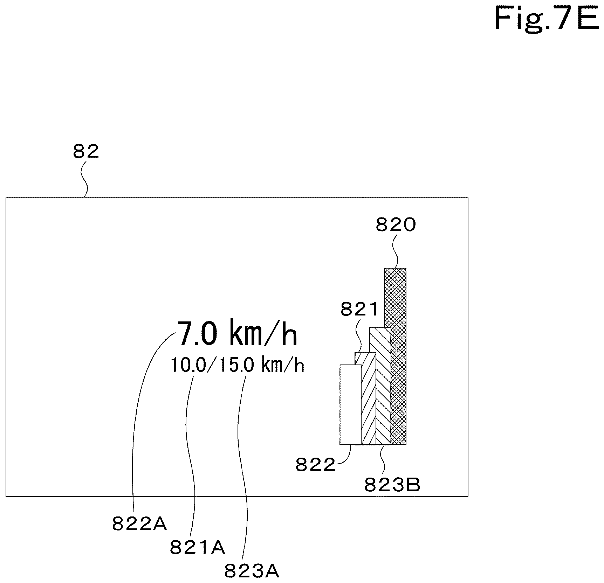

FIG. 7E illustrates an eighth example of the meter image display portion 82. As illustrated in FIG. 7E, the meter image display portion 82 may display a vertical rod-shaped bar indication portion 820, a vertical rod-shaped first bar indication 821, a vertical rod-shaped second bar indication 822, and a third bar indication 823B indicative of the upper-limit indication 823 in a vertical rod-shape side by side. As illustrated in FIG. 7E, the bar indication portion 820, the first bar indication 821, the second bar indication 822, and the third bar indication 823B are displayed in a manner such that adjacent indications partially overlap, but may be displayed such that adjacent indications do not overlap.

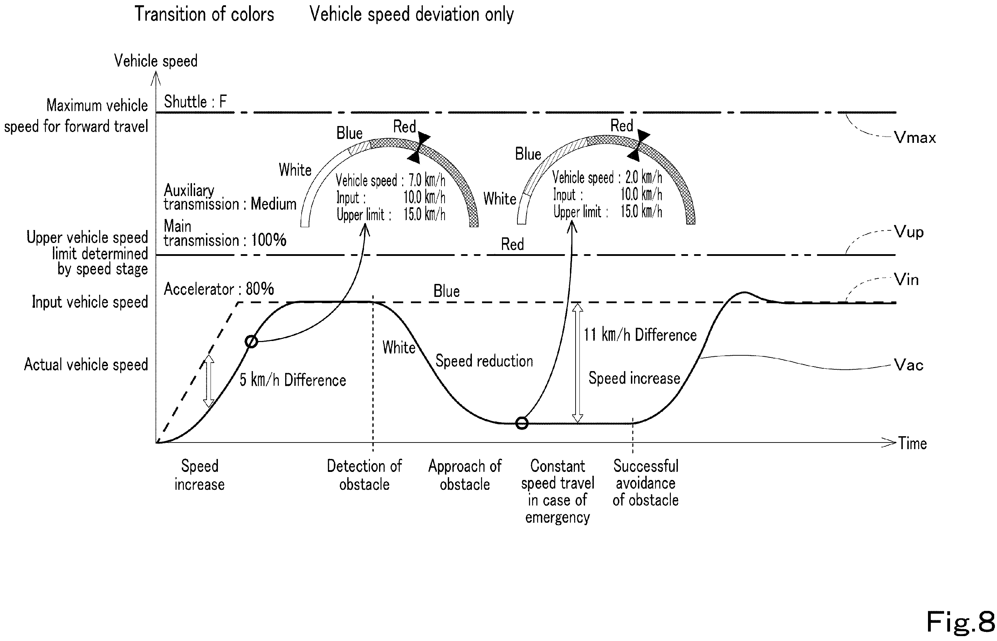

FIG. 8 illustrates an example of transition of deviation of the actual vehicle speed Vac with respect to the input vehicle speed Vin, and indication on the meter image display portion 82 when the speed-reduction condition is satisfied.

As illustrated in FIG. 8, in a stop state of the remote working vehicle 1, it is assumed that a human remote manipulator operates the auxiliary speed-change operation element 35d1 to the "medium" position (auxiliary transmission: medium), and operates the main speed-change operation element 35d2 to the position (main transmission: 100%) where the speed stage of the main transmission is set to "10". Then it is assumed that the human remote manipulator operates (the first operation) the forward/rearward travel switch lever 35e (so-called shuttle) to the forward travel position, and performs a pedal depression operation (for example, the amount of pedal depression is 80%) on the input interface IP (the accelerator pedal 35b) for remote operation to start forward travel of the remote working vehicle 1.

When speed increase of the remote working vehicle 1 illustrated in FIG. 8 is performed, in other words, in a state where the actual vehicle speed Vac is lower than the input vehicle speed Vin, for example, the meter image display portion 82 displays the first bar indication 821 and the first numerical indication 821A which indicate that the input vehicle speed Vin is "Input: 10.0 km/h", the second bar indication 822 and the second numerical indication 822A which indicate that the actual vehicle speed Vac is "Vehicle speed: 7.0 km/h", and the upper-limit indication 823 and the third numerical indication 823A which indicate that the upper vehicle speed limit Vup determined by the transmission gear (speed stage, transmission gear ratio) is "Maximum: 15.0 km/h".

As illustrated in FIG. 8, during travel of the remote working vehicle 1, when the predetermined speed-reduction condition is satisfied (for example, a safety function is activated due to detection of an obstacle by the second detector 26), regardless of the input vehicle speed Vin indicated by the input interface IP (the accelerator pedal 35b) for remote operation, the controller 21 starts to reduce the speed of the remote working vehicle 1, resulting in speed reduction in case of emergency, and low speed (for example, [2 km/h]) travel in case of emergency.

In this case, even when the amount of depression of the accelerator pedal 35b by the human remote manipulator remains at 80%, low speed (for example, [2 km/h]) travel in case of emergency is maintained, thus the meter image display portion 82 displays the second bar indication 822 and the second numerical indication 822A which indicate that the actual vehicle speed Vac is "Vehicle speed: 2.0 km/h".

Subsequently, as illustrated in FIG. 8, when an obstacle is successfully avoided (for example, when a small animal as an obstacle is no longer present, or an obstacle is avoided by a human remote manipulator taking a detour route), the controller 21 performs sudden (rapid) speed increase of the remote working vehicle 1 to achieve the input vehicle speed Vin specified by the accelerator pedal 35b, thus the input vehicle speed Vin matches the actual vehicle speed Vac, resulting in constant speed travel. In this process, the meter image display portion 82 sequentially displays the first bar indication 821 and the first numerical indication 821A indicative of the input vehicle speed Vin, the second bar indication 822 and the second numerical indication 822A indicative of the actual vehicle speed Vac, and the upper-limit indication 823 and the third numerical indication 823A indicative of the upper vehicle speed limit Vup determined by the current gear.

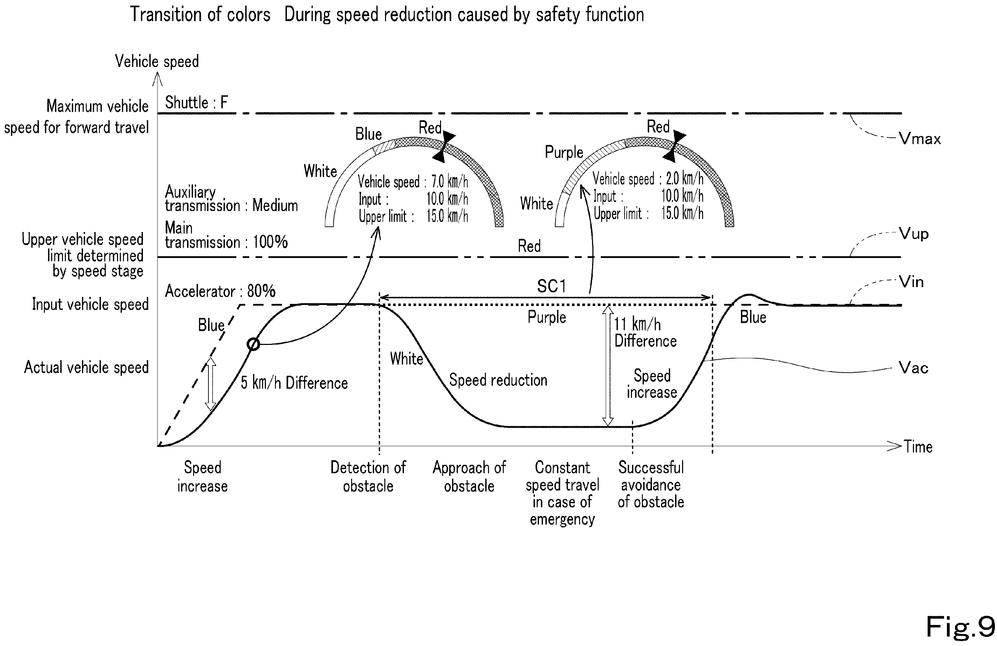

FIG. 9 illustrates an example of transition of deviation of the actual vehicle speed Vac with respect to the input vehicle speed Vin, and indication on the meter image display portion 82 when the speed-reduction condition is satisfied.

As illustrated in FIG. 9, when the predetermined speed-reduction condition is satisfied, the controller 21 reduces the speed of the travel vehicle body 3 regardless of the input vehicle speed Vin indicated by the input interface IP. When the speed-reduction condition is satisfied (when the remote working vehicle 1 is limited to a vehicle speed lower than the input vehicle speed Vin due to detection of an obstacle), the display DP (the meter image display portion 82) may display, in a period SC1 (a period of speed reduction caused by satisfaction of the speed-reduction condition) illustrated in FIG. 9, the first bar indication 821 in a first display manner (for example, in purple) indicating that speed reduction caused by satisfaction of the speed-reduction condition is being performed. The above-stated "period of speed reduction caused by satisfaction of the speed-reduction condition" includes: the period of transition from the input vehicle speed Vin to a low speed in case of emergency; the period of constant speed travel at a low speed (speed which has been reduced) in case of emergency; and the period (period until the vehicle speed is resumed) of transition from a low speed in case of emergency after discontinuation of speed reduction to the input vehicle speed Vin or a vehicle speed close to the input vehicle speed Vin. The meter image display portion 82 displays the first bar indication 821 in the first display manner (for example, in purple) in the period SC1 (period in which the speed-reduction condition is satisfied) illustrated in FIG. 9.

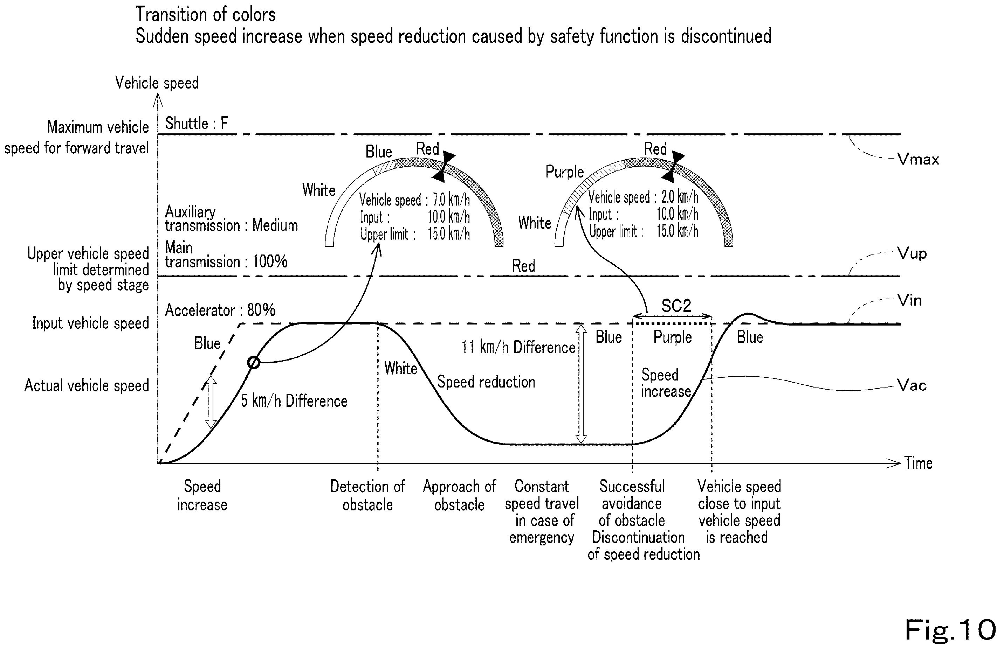

FIG. 10 illustrates an example of transition of deviation of the actual vehicle speed Vac with respect to the input vehicle speed Vin, and indication on the meter image display portion 82 when the speed-reduction condition is satisfied.

As illustrated in FIG. 10, when the speed reduction of the travel vehicle body 3 caused by satisfaction of the speed-reduction condition is discontinued, the display DP (the meter image display portion 82) may display, in a period SC2 (period in which speed reduction caused by satisfaction of the speed-reduction condition is discontinued) illustrated in FIG. 10, the first bar indication 821 in the second display manner (for example, in purple or purple-red) indicating that the speed reduction caused by satisfaction of the speed-reduction condition is discontinued. The above-stated "period in which speed reduction caused by satisfaction of the speed-reduction condition is discontinued" includes the period (period until the vehicle speed is resumed) since determination of successful avoidance of an obstacle to discontinue the speed reduction until the remote working vehicle 1 reaches the input vehicle speed Vin or a vehicle speed close to the input vehicle speed Vin. In FIG. 10, the meter image display portion 82 displays the first bar indication 821 in the second display manner (for example, in purple or purple-red) in the period SC2 (period in which speed reduction caused by satisfaction of the speed-reduction condition is discontinued).

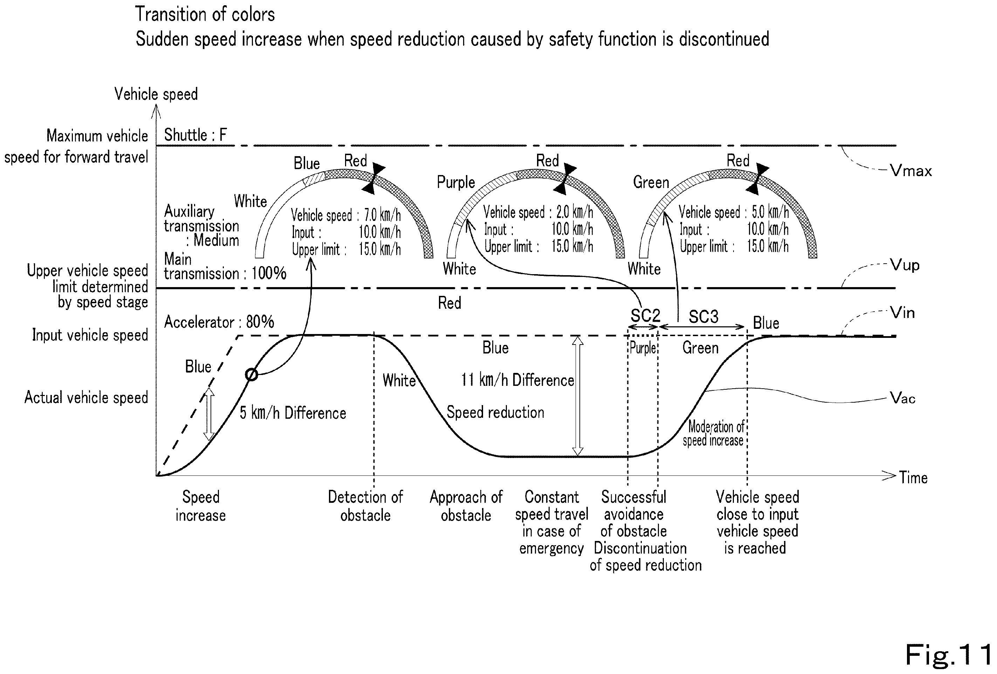

FIG. 11 illustrates an example of transition of deviation of the actual vehicle speed Vac with respect to the input vehicle speed Vin, and indication on the meter image display portion 82 when the speed-reduction condition is satisfied.

As illustrated in FIG. 11, when a speed increase of the travel vehicle body 3 after discontinuation of the speed reduction caused by satisfaction of the speed-reduction condition is performed in a moderate manner, the display DP (the meter image display portion 82) may display, in a period SC3 (period in which speed increase is performed in a moderate manner) after the period SC2 illustrated in FIG. 11, the first bar indication 821 in a third display manner (for example, in green) indicating that speed increase is performed in a moderate manner. In FIG. 11, the meter image display portion 82 displays the first bar indication 821 in the third display manner (for example, in green) in the period SC3 (period in which speed increase is performed in a moderate manner).

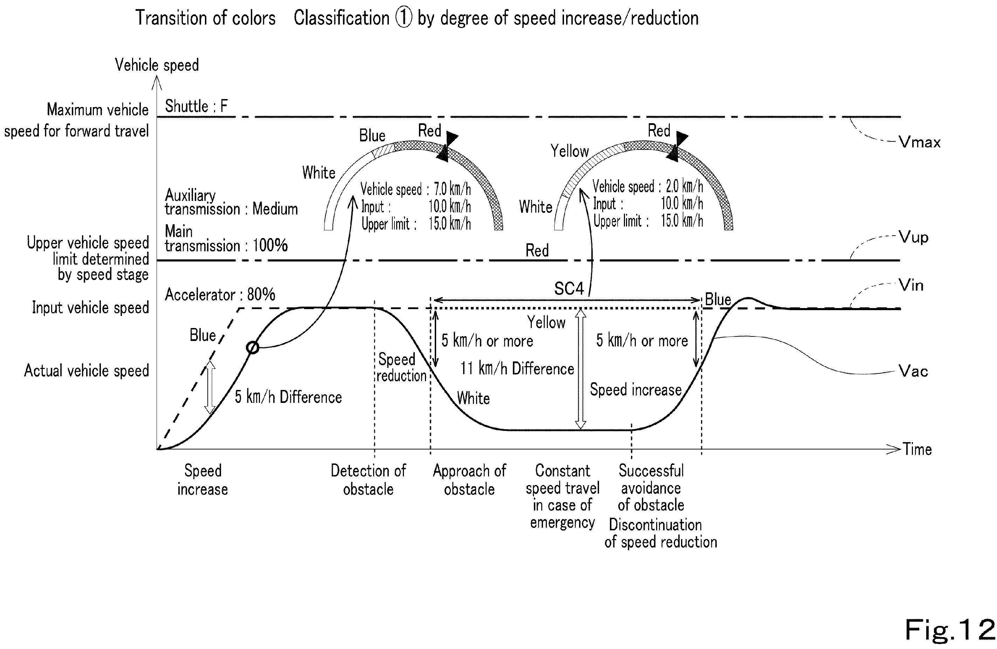

FIG. 12 illustrates an example of transition of deviation of the actual vehicle speed Vac with respect to the input vehicle speed Vin, and indication on the meter image display portion 82 when the speed-reduction condition is satisfied.

As illustrated in FIG. 12, when the difference between the input vehicle speed Vin and the actual vehicle speed Vac is equal to or greater than a first threshold (for example, 5 [km/h]), the display DP (the meter image display portion 82) may display the first bar indication 821 in a first threshold manner (for example, in yellow) in a period SC4 in which the difference is equal to or greater than the first threshold (for example, 5 [km/h]). In FIG. 12, the meter image display portion 82 displays the first bar indication 821 in the first threshold manner (for example, in yellow) in the period SC4 (period in which the difference is equal to or greater than the first threshold).

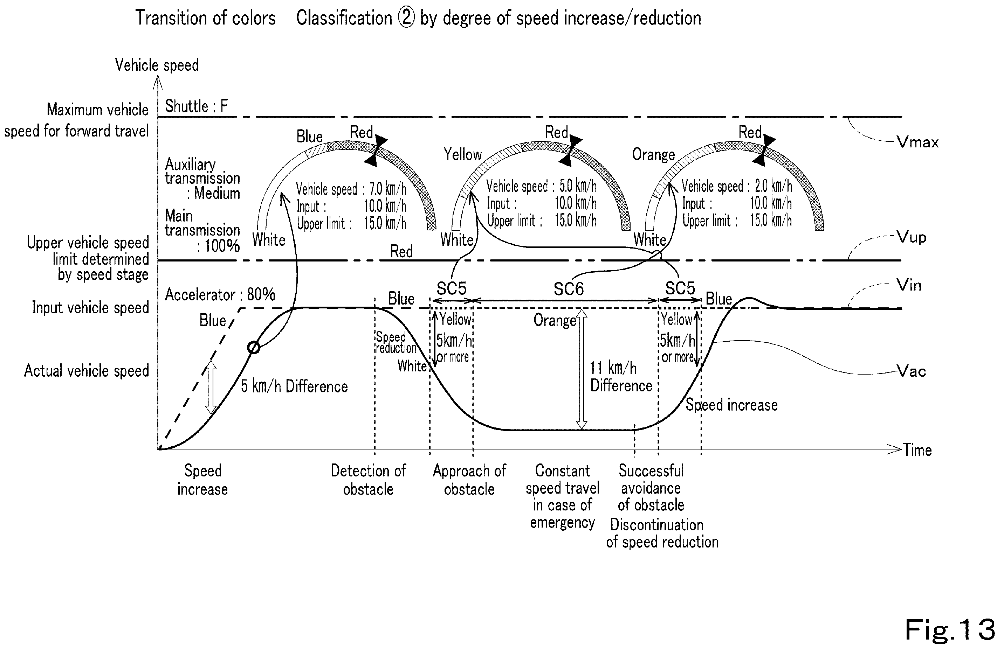

FIG. 13 illustrates an example of transition of deviation of the actual vehicle speed Vac with respect to the input vehicle speed Vin, and indication on the meter image display portion 82 when the speed-reduction condition is satisfied.

As illustrated in FIG. 13, when the difference between the input vehicle speed Vin and the actual vehicle speed Vac is equal to or greater than the first threshold (for example, 5 [km/h]), and less than a second threshold (for example, 10 [km/h]) greater than the first threshold, the display DP (the meter image display portion 82) displays the first bar indication 821 in the first threshold manner (for example, in yellow) in a period SC5 in which the difference is equal to or greater than the first threshold (for example, 5 [km/h]). In addition, when the difference between the input vehicle speed Vin and the actual vehicle speed Vac is equal to or greater than the second threshold (for example, 10 [km/h]), the display DP (the meter image display portion 82) may display the first bar indication 821 in the second threshold manner (for example, in orange) in a period SC6 in which the difference is equal to or greater than the second threshold (for example, 10 [km/h]).

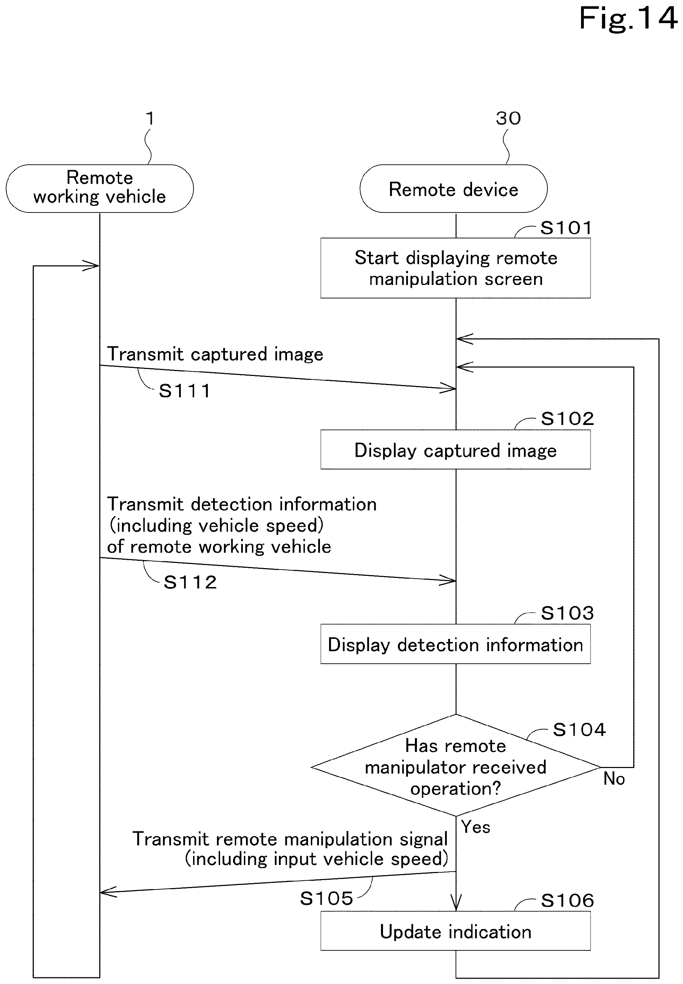

FIG. 14 is a flowchart illustrating a display process on the display screen G in the remote device 30. The controller 21 performs the steps of the flowchart illustrated on the left side of FIG. 14 by executing a program stored in the storage device 22. Meanwhile, the controller 31 of the remote device 30 performs the steps of the flowchart illustrated on the right side of FIG. 14 by executing a program stored in the storage device 32.

When receiving an instruction to start a remote manipulation on the remote working vehicle 1 with the remote manipulator 35, the controller 31 of the remote device 30 starts to control the remote manipulation on the remote working vehicle 1. As illustrated in FIG. 14, when the controller 31 starts to control the remote manipulation on the remote working vehicle 1, the display controller 31b starts a process of displaying the display screen G on the display DP (S101).

The controller 21 of the remote working vehicle 1 transmits, as detection information of the remote working vehicle 1, e.g., the sensing information of the second detector 26 to the remote device 30 by the second communicator 23 under the control of the controller 21 (S111). For example, the second communicator 23 transmits the first captured image 70a and the second captured image 70b captured by the camera 26c to the remote device 30 (S111).

The first communicator 33 of the remote device 30 receives the first captured image 70a and the second captured image 70b. When the forward/rearward travel switch lever 35e is in the forward travel position or the neutral position, as illustrated on the left side of FIG. 4, the display controller 31b displays the first captured image 70a on the image display portion 81 of the display screen G of the display DP (S102). Meanwhile, when the forward/rearward travel switch lever 35e is in the rearward travel position, as illustrated on the right side of FIG. 4, the display controller 31b displays the second captured image 70b on the image display portion 81 of the display screen G of the display DP (S102).

The second communicator 23 transmits the detection information (such as the detection information of the position detector 24, the first detector 25, the state detector 27, and the third detector 28) of the remote working vehicle 1 to the first communicator 33 under the control of the controller 21 (S112). For example, the second communicator 23 transmits actual vehicle speed information indicating the actual vehicle speed Vac acquired by the vehicle speed acquirer 27a to the first communicator 33.

The controller 21 sequentially performs the process in S111 and S112 at a predetermined cycle or a predetermined timing. Note that S111 and S112 may be executed at the same time, or the order of execution is not required.

As illustrated in FIG. 4, the display DP displays the detection information of the remote working vehicle 1 on the display screen G (S103). The display DP displays, on the meter image display portion 82, a meter image as the detection information of the remote working vehicle 1, the meter image indicating the actual vehicle speed Vac of the remote working vehicle 1, the input vehicle speed Vin from the input interface IP for remote operation, and the upper vehicle speed limit Vup in the current shift state of the transmission 5 in a meter display format. The display DP displays the indication of the first state and the second state indicating the state of the remote working vehicle 1 on the first state display portion 83a and the second state display portion 83b.

As illustrated in FIG. 14, the controller 31 determines whether the remote manipulator 35 has received an operation (S104). When determining that the remote manipulator 35 has received an operation (Yes in S104), the controller 31 transmits a corresponding remote manipulation signal (including the input vehicle speed Vin from the input interface IP for remote operation) to the remote working vehicle 1 (S105).

The controller 31 updates the indication related to the operation received by the remote manipulator 35 (S106). For example, when the input vehicle speed Vin from the input interface IP for remote operation is changed (for example, the amount of operation of the accelerator pedal 35b is changed from 70% to 80%), the indication is updated to the changed input vehicle speed Vin (for example, the indication of the amount of operation of the accelerator pedal 35b is changed from 70% to 80%). After S106, the controller 31 returns to S102. Note that S105 and S106 may be executed at the same time, or the order of execution is not required. Meanwhile, when determining that the remote manipulator 35 has not received an operation (No in S104), the controller 31 returns to S102.

### Second Example Embodiment

FIG. 15 is a block diagram of an information display system SY in a second example embodiment of the present invention. As illustrated in FIG. 1, the above-described information display system SY in the first example embodiment is configured to include the remote working vehicle 1 and the remote device 30, but is not limited thereto. As illustrated in FIG. 15, the information display system SY in the second example embodiment includes only the remote working vehicle 1 or a working vehicle 1A which is not remotely manipulated. In other words, the remote working vehicle 1 or the working vehicle 1A is equipped with the information display system SY in the second example embodiment. In the second example embodiment, components different from those in the first example embodiment will be described, and a description of the same components will be omitted.

As illustrated in FIG. 15, the information display system SY in the second example embodiment includes: an input interface IP (an accelerator pedal 11b) to indicate the input vehicle speed Vin of the travel vehicle body 3 according to an input operation by a user; a controller 21 to control the vehicle speed of the travel vehicle body 3 based on the input vehicle speed Vin from the input interface IP; a vehicle speed acquirer 27a to acquire the actual vehicle speed Vac of the travel vehicle body 3; and a display DP to display the input vehicle speed Vin indicated by the input interface IP and the actual vehicle speed Vac acquired by the vehicle speed acquirer 27a. In short, the information display system SY in the second example embodiment includes the input interface IP (the accelerator pedal 11b), the controller 21, the vehicle speed acquirer 27a, and the display DP in the remote working vehicle 1 or the working vehicle 1A.

The travel vehicle body 3 is provided with the prime mover 4, the traveling device 7, and the transmission 5 to change the propulsive force of the traveling device 7 that is based on the power from the prime mover 4. The controller 21 acquires the upper vehicle speed limit Vup that is achievable in the current shift state of the transmission 5, and the display DP displays the upper vehicle speed limit Vup together with the input vehicle speed Vin and the actual vehicle speed Vac.

The information display system SY in the second example embodiment includes the operation member 11e to receive an instruction for forward travel or rearward travel of the travel vehicle body 3. The controller 21 acquires a predetermined maximum vehicle speed Vmax for forward travel or rearward travel of the travel vehicle body 3 based on the instruction for forward travel or rearward travel received at the operation member 11e. In the case of forward travel of the travel vehicle body 3, the display DP displays the input vehicle speed Vin, the actual vehicle speed Vac, the upper vehicle speed limit Vup, and the maximum vehicle speed Vmax for forward travel, and in the case of rearward travel of the travel vehicle body 3, the display DP displays the input vehicle speed Vin, the actual vehicle speed Vac, the upper vehicle speed limit Vup, and the maximum vehicle speed Vmax for rearward travel.

Main characteristic items and effects of information display systems SY in example embodiments described above are as follows.

(Item A1) An information display system SY including an input interface IP to indicate an input vehicle speed Vin of a travel vehicle body 3 according to an input operation by a user, a controller 21 configured or programmed to control a vehicle speed of the travel vehicle body 3 based on the input vehicle speed Vin from the input interface IP, a vehicle speed acquirer 27a to acquire an actual vehicle speed Vac of the travel vehicle body 3, and a display DP to display the input vehicle speed Vin indicated by the input interface IP and the actual vehicle speed Vac acquired by the vehicle speed acquirer 27a.

With this configuration, the information display system SY displays the input vehicle speed Vin and the actual vehicle speed Vac of the travel vehicle body 3 on the display DP, thus can notify a user of matching and deviation between the input vehicle speed Vin and the actual vehicle speed Vac of the travel vehicle body 3. Thus, a user can manipulate the working vehicle 1A (or the remote working vehicle 1) while recognizing the correspondence between the indicated input vehicle speed Vin and the actual vehicle speed Vac of the travel vehicle body 3. Therefore, the information display system SY can support (assist) the vehicle speed control performed by a user on the working vehicle 1A (or the remote working vehicle 1) by providing the user with the correspondence between the input vehicle speed Vin and the actual vehicle speed Vac of the travel vehicle body 3.

(Item A2) The information display system SY according to item A1, wherein the travel vehicle body 3 is provided with a prime mover 4, a traveling device 7, and a transmission 5 to change a propulsive force of the traveling device 7 that is based on power from the prime mover 4, the controller 21 is configured or programmed to acquire an upper vehicle speed limit Vup that is achievable in a current shift state of the transmission 5, and the display DP is configured to display the upper vehicle speed limit Vup together with the input vehicle speed Vin and the actual vehicle speed Vac.

With this configuration, the information display system SY displays the upper vehicle speed limit Vup that is achievable in the current shift state of the transmission 5 on the display DP together with the input vehicle speed Vin and the actual vehicle speed Vac, thus not only can notify a user of matching and deviation between the input vehicle speed Vin and the actual vehicle speed Vac, but also can further notify the user of the relationship between the upper vehicle speed limit Vup in the current shift state of the transmission 5, the input vehicle speed Vin, and the actual vehicle speed Vac. Thus, a user can manipulate the working vehicle 1A (or the remote working vehicle 1) while recognizing the correspondence between the indicated input vehicle speed Vin and the actual vehicle speed Vac of the travel vehicle body 3, and the relationship of the input vehicle speed Vin and the actual vehicle speed Vac with respect to the upper vehicle speed limit Vup. Therefore, the information display system SY can support the vehicle speed control of the working vehicle 1A (or the remote working vehicle 1) performed by a user by providing the user with the correspondence between the input vehicle speed Vin, the actual vehicle speed Vac of the travel vehicle body 3, and the upper vehicle speed limit Vup in the current shift state of the transmission 5.

(Item A3) The information display system SY according to item A1 or A2, further including an operation member 11e to receive an instruction for forward travel or rearward travel of the travel vehicle body 3, wherein the controller 21 is configured or programmed to acquire a predetermined maximum vehicle speed Vmax for forward travel or rearward travel of the travel vehicle body 3 based on the instruction for forward travel or rearward travel received at the operation member 11e, and the display DP is configured to display the input vehicle speed Vin, the actual vehicle speed Vac, the upper vehicle speed limit Vup, and the maximum vehicle speed Vmax for forward travel in a case of forward travel of the travel vehicle body 3, and display the input vehicle speed Vin, the actual vehicle speed Vac, the upper vehicle speed limit Vup, and the maximum vehicle speed Vmax for rearward travel in a case of rearward travel of the travel vehicle body 3.

With this configuration, the information display system SY further displays the maximum vehicle speed Vmax for forward travel or rearward travel of the travel vehicle body 3 on the display DP together with the input vehicle speed Vin, the actual vehicle speed Vac, and the upper vehicle speed limit Vup determined by the shift state, thus not only can notify a user of matching and deviation between the input vehicle speed Vin and the actual vehicle speed Vac, but also can further notify the user of the relationship between the maximum vehicle speed Vmax for forward travel or rearward travel of the travel vehicle body 3, the input vehicle speed Vin, the actual vehicle speed Vac, and the upper vehicle speed limit Vup in the current shift state of the transmission 5. Thus, a user can manipulate the working vehicle 1A (or the remote working vehicle 1) while recognizing the correspondence between the input vehicle speed Vin indicated and the actual vehicle speed Vac of the travel vehicle body 3, and the relationship of the input vehicle speed Vin, the actual vehicle speed Vac, and the upper vehicle speed limit Vup with respect to the maximum vehicle speed Vmax for forward travel or rearward travel of the travel vehicle body 3. Therefore, the information display system SY can further support the vehicle speed control of the working vehicle 1A (or the remote working vehicle 1) performed by a user by providing the user with the correspondence between the input vehicle speed Vin, the actual vehicle speed Vac of the travel vehicle body 3, the upper vehicle speed limit Vup in the current shift state of the transmission 5, and the maximum vehicle speed Vmax for forward travel or rearward travel of the travel vehicle body 3.

(Item A4) The information display system SY according to any one of items A1 to A3, wherein the display DP is configured to display a first bar indication 821 indicative of the input vehicle speed Vin and a second bar indication 822 indicative of the actual vehicle speed Vac such that the first bar indication 821 and the second bar indication 822 at least partially overlap each other.

With this configuration, the display DP displays the first bar indication 821 indicative of the input vehicle speed Vin and the second bar indication 822 indicative of the actual vehicle speed Vac such that the first bar indication 821 and the second bar indication 822 at least partially overlap each other. Thus, the display space can be reduced, and the input vehicle speed Vin and the actual vehicle speed Vac can be compared and displayed in an easy-to-understand manner.

(Item A5) The information display system SY according to item A4, wherein the display DP is configured to display an upper-limit indication 823 indicative of the upper vehicle speed limit Vup such that at least a portion of the upper-limit indication 823 is not hidden by the first bar indication 821 or the second bar indication 822.

With this configuration, the display DP displays at least a portion of the upper-limit indication 823 indicative of the upper vehicle speed limit Vup at a position not hidden by the first bar indication 821 or the second bar indication 822. Thus, it is possible to eliminate or reduce the likelihood that an indication of the upper vehicle speed limit Vup in the current shift state of the transmission 5 will be hidden behind the first bar indication 821 and/or the second bar indication 822 and not be seen. Thus, it is possible to reliably notify a user of the upper vehicle speed limit Vup.

(Item A6) The information display system SY according to item A5, wherein the display DP is configured to further display a first numerical indication 821A indicative of the input vehicle speed Vin, a second numerical indication 822A indicative of the actual vehicle speed Vac, and a third numerical indication 823A indicative of the upper vehicle speed limit Vup.

With this configuration, the display DP further displays the first numerical indication 821A indicative of the input vehicle speed Vin, the second numerical indication 822A indicative of the actual vehicle speed Vac, and the third numerical indication 823A indicative of the upper vehicle speed limit Vup. Thus, it is possible to reliably notify a user of each vehicle speed.

(Item A7) The information display system SY according to item A6, wherein the display DP is configured to display the first numerical indication 821A and the first bar indication 821 in a first common display manner, display the second numerical indication 822A and the second bar indication 822 in a second common display manner, and display the upper-limit indication 823 and the third numerical indication 823A indicative of the upper vehicle speed limit Vup in a third common display manner.

With this configuration, the first numerical indication 821A and the first bar indication 821 are displayed in common in the first common display manner, the second numerical indication 822A and the second bar indication 822 are displayed in common in the second common display manner, and the upper-limit indication 823 and the third numerical indication 823A indicative of the upper vehicle speed limit Vup are displayed in common in the third common display manner. Thus, it is possible to intuitively notify a user that the first numerical indication 821A and the first bar indication 821 are related, the second numerical indication 822A and the second bar indication 822 are related, and the upper-limit indication 823 and the third numerical indication 823A indicative of the upper vehicle speed limit Vup are related.

(Item A8) The information display system SY according to item A6 or A7, wherein the display DP is configured to display the first bar indication 821 in a first threshold manner when a difference between the input vehicle speed Vin and the actual vehicle speed Vac is equal to or greater than a first threshold.

With this configuration, when the difference between the input vehicle speed Vin and the actual vehicle speed Vac is equal to or greater than the first threshold, the display DP displays the first bar indication 821 in the first threshold manner. Thus, at a glance of display of the first bar indication 821 in the first threshold manner, a user can recognize that the difference between the input vehicle speed Vin and the actual vehicle speed Vac is equal to or greater than the first threshold.

(Item A9) The information display system SY according to item A8, wherein the display DP is configured to display the first bar indication 821 in a second threshold manner when the difference between the input vehicle speed Vin and the actual vehicle speed Vac is equal to or greater than a second threshold greater than the first threshold.

With this configuration, when the difference between the input vehicle speed Vin and the actual vehicle speed Vac is equal to or greater than the second threshold greater than the first threshold, the display DP displays the first bar indication 821 in the second threshold manner. Thus, a user can recognize the degree of the difference between the input vehicle speed Vin and the actual vehicle speed Vac based on whether the first bar indication 821 is displayed in the first threshold manner or the second threshold manner.

(Item A10) The information display system SY according to any one of items A6 to A9, wherein the controller 21 is configured or programmed to, when a predetermined speed-reduction condition is satisfied, reduce a speed of the travel vehicle body 3 regardless of the input vehicle speed Vin indicated by the input interface IP, and the display DP is configured to, when the speed-reduction condition is satisfied, display the first bar indication 821 in a first display manner indicating that a speed reduction of the travel vehicle body 3 caused by satisfaction of the speed-reduction condition is being performed.

With this configuration, when the predetermined speed-reduction condition is satisfied, the controller 21 reduces the speed of the travel vehicle body 3 regardless of the input vehicle speed Vin indicated by the input interface IP. When the predetermined speed-reduction condition is satisfied, the display DP displays the first bar indication 821 in the first display manner indicating that speed reduction of the travel vehicle body 3 caused by satisfaction of the predetermined speed-reduction condition is being performed. Thus, at a glance of the first bar indication 821 in the first display manner, a user can recognize that the speed reduction of the travel vehicle body 3 caused by satisfaction of the predetermined speed-reduction condition is being performed.

(Item A11) The information display system SY according to item A10, wherein the display DP is configured to, when the speed reduction of the travel vehicle body 3 caused by satisfaction of the speed-reduction condition is discontinued, display the first bar indication 821 in a second display manner indicating that the speed reduction caused by satisfaction of the speed-reduction condition is discontinued.

With this configuration, when the speed reduction of the travel vehicle body 3 caused by satisfaction of the speed-reduction condition is discontinued, the display DP displays the first bar indication 821 in the second display manner indicating that the speed reduction caused by satisfaction of the speed-reduction condition is discontinued. Thus, at a glance of the first bar indication 821 in the second display manner, a user can recognize that the speed reduction of the travel vehicle body 3 caused by satisfaction of the speed-reduction condition is discontinued.

(Item A12) The information display system SY according to item A11, wherein the display DP is configured to, when a speed increase of the travel vehicle body 3 after discontinuation of the speed reduction caused by satisfaction of the speed-reduction condition is performed in a moderate manner, display the first bar indication 821 in a third display manner indicating that the speed increase is performed in a moderate manner.

With this configuration, when a speed increase of the travel vehicle body 3 after discontinuation of the speed reduction caused by satisfaction of the speed-reduction condition is performed in a moderate manner, the display DP displays the first bar indication 821 in the third display manner indicating that the speed increase is performed in a moderate manner. Thus, at a glance of the first bar indication 821 in the third display manner, a user can recognize that speed increase of the travel vehicle body 3 after discontinuation of the speed reduction caused by satisfaction of the speed-reduction condition is performed based on the input vehicle speed Vin in a moderate manner.

(Item A13) The information display system SY according to any one of items A1 to A12, further including a remote working vehicle 1 to attach a working device 2 thereto, and a remote device 30 including a remote manipulator 35 to remotely manipulate the remote working vehicle 1, wherein the remote device 30 includes a first communicator 33 to communicate with the remote working vehicle 1, a remote input interface IP which is the input interface IP, and the display DP, the remote working vehicle 1 includes a second communicator 23 to communicate with the first communicator 33, the travel vehicle body 3, the controller 21, and the vehicle speed acquirer 27a, and the display DP is configured to display an input vehicle speed Vin indicated by the remote input interface IP and an actual vehicle speed Vac of the remote working vehicle 1 received by the first communicator 33.

With this configuration, when the remote working vehicle 1 is remotely manipulated by the remote manipulator 35, the information display system SY displays the input vehicle speed Vin which is the inputted vehicle speed for the remote working vehicle 1 and the actual vehicle speed Vac of the remote working vehicle 1 on the display DP of the remote device 30. Thus, it is possible to notify a remote user (human remote operator) of matching and deviation between the input vehicle speed Vin for the remote working vehicle 1 and the actual vehicle speed Vac of the remote working vehicle 1. Thus, a remote user (human remote operator) can manipulate the remote working vehicle 1 while recognizing the correspondence between the indicated input vehicle speed Vin and the actual vehicle speed Vac of the remote working vehicle 1. Therefore, the information display system SY can support the vehicle speed control performed by a remote user (human remote operator) on the remote working vehicle 1 by providing the remote user (human remote operator) with the correspondence between the input vehicle speed Vin and the actual vehicle speed Vac of the remote working vehicle 1.

While example embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. An information display system (SY) comprising:
an input interface (IP) to indicate an input vehicle speed (Vin) of a travel vehicle body (3) according to an input operation by a user;
a controller (21) configured or programmed to control a vehicle speed of the travel vehicle body (3) based on the input vehicle speed (Vin) from the input interface (IP);
a vehicle speed acquirer (27a) to acquire an actual vehicle speed (Vac) of the travel vehicle body (3); and
a display (DP) to display the input vehicle speed (Vin) indicated by the input interface (IP) and the actual vehicle speed (Vac) acquired by the vehicle speed acquirer (27a).

2. The information display system (SY) according to claim 1, wherein the travel vehicle body (3) is provided with a prime mover (4), a traveling device (7), and a transmission (5) to change a propulsive force of the traveling device (7) that is based on power from the prime mover (4);
the controller (21) is configured or programmed to acquire an upper vehicle speed limit (Vup) that is achievable in a current shift state of the transmission (5); and
the display (DP) is configured to display the upper vehicle speed limit (Vup) together with the input vehicle speed (Vin) and the actual vehicle speed (Vac).

3. The information display system (SY) according to claim 2, further comprising an operation member (11e) to receive an instruction for forward travel or rearward travel of the travel vehicle body (3); wherein
the controller (21) is configured or programmed to acquire a predetermined maximum vehicle speed (Vmax) for forward travel or rearward travel of the travel vehicle body (3) based on the instruction for forward travel or rearward travel received at the operation member (11e); and
the display (DP) is configured to display the input vehicle speed (Vin), the actual vehicle speed (Vac), the upper vehicle speed limit (Vup), and the maximum vehicle speed (Vmax) for forward travel in a case of forward travel of the travel vehicle body (3), and display the input vehicle speed (Vin), the actual vehicle speed (Vac), the upper vehicle speed limit (Vup), and the maximum vehicle speed (Vmax) for rearward travel in a case of rearward travel of the travel vehicle body (3).

4. The information display system (SY) according to claim 2 or 3, wherein the display (DP) is configured to display a first bar indication (821) indicative of the input vehicle speed (Vin) and a second bar indication (822) indicative of the actual vehicle speed (Vac) such that the first bar indication (821) and the second bar indication (822) at least partially overlap each other.

5. The information display system (SY) according to claim 4, wherein the display (DP) is configured to display an upper-limit indication (823) indicative of the upper vehicle speed limit (Vup) such that at least a portion of the upper-limit indication (823) is not hidden by the first bar indication (821) or the second bar indication (822).

6. The information display system (SY) according to claim 5, wherein the display (DP) is configured to further display a first numerical indication (821A) indicative of the input vehicle speed (Vin), a second numerical indication (822A) indicative of the actual vehicle speed (Vac), and a third numerical indication (823A) indicative of the upper vehicle speed limit (Vup).

7. The information display system (SY) according to claim 6, wherein the display (DP) is configured to display the first numerical indication (821A) and the first bar indication (821) in a first common display manner, display the second numerical indication (822A) and the second bar indication (822) in a second common display manner, and display the upper-limit indication (823) and the third numerical indication (823A) indicative of the upper vehicle speed limit (Vup) in a third common display manner.

8. The information display system (SY) according to claim 6, wherein the display (DP) is configured to display the first bar indication (821) in a first threshold manner when a difference between the input vehicle speed (Vin) and the actual vehicle speed (Vac) is equal to or greater than a first threshold.

9. The information display system (SY) according to claim 8, wherein the display (DP) is configured to display the first bar indication (821) in a second threshold manner when the difference between the input vehicle speed (Vin) and the actual vehicle speed (Vac) is equal to or greater than a second threshold greater than the first threshold.

10. The information display system (SY) according to claim 6, wherein
the controller (21) is configured or programmed to, when a predetermined speed-reduction condition is satisfied, reduce a speed of the travel vehicle body (3) regardless of the input vehicle speed (Vin) indicated by the input interface (IP); and
the display (DP) is configured to, when the speed-reduction condition is satisfied, display the first bar indication (821) in a first display manner indicating that a speed reduction of the travel vehicle body (3) caused by satisfaction of the speed-reduction condition is being performed.

11. The information display system (SY) according to claim 10, wherein the display (DP) is configured to, when the speed reduction of the travel vehicle body (3) caused by satisfaction of the speed-reduction condition is discontinued, display the first bar indication (821) in a second display manner indicating that the speed reduction caused by satisfaction of the speed-reduction condition is discontinued.

12. The information display system (SY) according to claim 11, wherein the display (DP) is configured to, when a speed increase of the travel vehicle body (3) after discontinuation of the speed reduction caused by satisfaction of the speed-reduction condition is performed in a moderate manner, display the first bar indication (821) in a third display manner indicating that the speed increase is performed in a moderate manner.

13. The information display system (SY) according to any one of claims 1 to 12, further comprising:
a remote working vehicle (1) to attach a working device (2) thereto; and
a remote device (30) including a remote manipulator (35) to remotely manipulate the remote working vehicle (1); wherein
the remote device (30) includes:
a first communicator (33) to communicate with the remote working vehicle (1);
a remote input interface (IP) which is the input interface (IP); and
the display (DP);
the remote working vehicle (1) includes:
a second communicator (23) to communicate with the first communicator (33);
the travel vehicle body (3);
the controller (21); and
the vehicle speed acquirer (27a); and
the display (DP) is configured to display an input vehicle speed (Vin) indicated by the remote input interface (IP) and an actual vehicle speed (Vac) of the remote working vehicle (1) received by the first communicator (33).
